(19) Europäisches Patentamt
European Patent Office
Office européen des brevets

(11) **EP 3 481 125 A1**

(12) **EUROPEAN PATENT APPLICATION**
published in accordance with Art. 153(4) EPC

(43) Date of publication:
**08.05.2019 Bulletin 2019/19**

(51) Int Cl.:
***H04W 72/12*** (2009.01)

(21) Application number: **17820599.3**

(22) Date of filing: **03.07.2017**

(86) International application number:
**PCT/KR2017/007049**

(87) International publication number:
**WO 2018/004323 (04.01.2018 Gazette 2018/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.07.2016 US 201662357393 P**

(71) Applicant: **LG Electronics Inc.**
**Seoul 07336 (KR)**

(72) Inventors:
• **KIM, Myoungseob**
**Seoul 06772 (KR)**
• **SEO, Hanbyul**
**Seoul 06772 (KR)**
• **LEE, Seungmin**
**Seoul 06772 (KR)**
• **CHAE, Hyukjin**
**Seoul 06772 (KR)**

(74) Representative: **Cabinet Plasseraud**
**66, rue de la Chaussée d'Antin**
**75440 Paris Cedex 09 (FR)**

(54) **METHOD FOR TRANSMITTING AND RECEIVING DATA IN WIRELESS COMMUNICATION SYSTEM AND APPARATUS THEREFOR**

(57)    The present disclosure proposes a method for transmitting and receiving data through sidelink in a wireless communication system supporting Vehicle-to-Everything (V2X) communication.

Particularly, the method performed by a first User Equipment includes receiving, from a base station, Downlink Control Information (DCI) including information related to a transmission of first control information; transmitting, to the second User Equipment, the first control information based on the received DCI; and transmitting, to the second User Equipment, one or more data through the sidelink.

【Figure 23】

```
          START
            │
            ▼
┌───────────────────────────────────┐
│ Receive DCI including information  │
│ related to a transmission of first │──── S2310
│ control information                │
└───────────────────────────────────┘
            │
            ▼
┌───────────────────────────────────┐
│ Transmit the first control         │
│ information based on the DCI       │──── S2320
└───────────────────────────────────┘
            │
            ▼
┌───────────────────────────────────┐
│ Transmit one or more data to the   │
│ second UE through the sidelink     │──── S2330
└───────────────────────────────────┘
            │
            ▼
          END
```

**Description**

[Technical Field]

The present invention relates to a wireless communication system, and more particularly, to a method for transmitting and receiving data between User Equipments in a wireless communication system that supports Vehicle-to-Everything (V2X) communication and an apparatus supporting the same.

[Background Art]

Mobile communication systems have been generally developed to provide voice services while guaranteeing user mobility. Such mobile communication systems have gradually expanded their coverage from voice services through data services up to high-speed data services. However, as current mobile communication systems suffer resource shortages and users demand even higher-speed services, development of more advanced mobile communication systems is needed.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive multiple input multiple output (MIMO), in-band full duplex, non-orthogonal multiple access (NOMA), supporting super-wide band, and device networking, have been researched.

[Disclosure]

[Technical Problem]

An object of the present disclosure is to provide a method for transmitting and receiving data through Sidelink between User Equipments in a wireless communication system that supports Vehicle-to-Everything (V2X) communication.

Particularly, an object of the present disclosure is to provide a method for determining data transmission timing based on Scheduling Assignment (SA) transmission timing in V2X communication.

In addition, an object of the present disclosure is to provide a method for determining data transmission timing based on DCI transmission timing in V2X communication.

In addition, an object of the present disclosure is to define a new field for determining transmission timing between data in V2X communication.

In addition, an object of the present disclosure is to apply either one of scheduling considering a priority when dynamic scheduling and Semi-Persistent Scheduling (SPS) are scheduled simultaneously in relation to a data transmission in V2X communication.

Technical objects to be achieved by the present invention are not limited to the aforementioned technical objects, and other technical objects not described above may be evidently understood by a person having ordinary skill in the art to which the present invention pertains from the following description.

[Technical Solution]

A method for transmitting data through sidelink in a wireless communication system supporting Vehicle-to-Everything (V2X) communication according to the present disclosure includes receiving, from a base station, Downlink Control Information (DCI) including information related to a transmission of first control information, the first control information is used for scheduling data transmitted to a second User Equipment; transmitting, to the second User Equipment, the first control information based on the received DCI; and transmitting, to the second User Equipment, one or more data through the sidelink, the DCI is transmitted in subframe #n, the first control information is transmitted in subframe #n+k or in a specific sidelink subframe generated after the subframe #n+k, and the DCI includes second control information indicating a timing gap between a first data transmission and a second data transmission.

In addition, in the present disclosure, the k is 4.

In addition, in the present disclosure, the first control information and the one or more data are transmitted to the second User Equipment on an identical timing.

In addition, in the present disclosure, the identical timing is an identical subframe.

In addition, in the present disclosure, the first data transmission is an initial transmission of data, and the second data transmission is a retransmission of data.

In addition, in the present disclosure, the first control information is a Scheduling Assignment (SA).

In addition, in the present disclosure, the second control information is a timing gap field.

In addition, in the present disclosure, the first control information includes the second control information.

In addition, in the present disclosure, the specific sidelink subframe includes initial sidelink subframes generated after the subframe #n+k.

In addition, in the present disclosure, when resource allocations for the one or more data are scheduled simultaneously by Dynamic Scheduling and Semi-Persistent Scheduling (SPS), either one of the Dynamic Scheduling and the SPS is applied based on a specific criterion.

In addition, in the present disclosure, the specific criterion includes at least one of a length of transmission period of the SPS or an importance of transmission data.

A first User Equipment for transmitting data through sidelink in a wireless communication system supporting Vehicle-to-Everything (V2X) communication according to the present disclosure includes a Radio Frequency (RF) unit configured to transmit and receive a radio signal; and a processor functionally connected with the RF unit, wherein the processor is configured to perform: receiving, from a base station, Downlink Control Information (DCI) including information related to a transmission of first control information, the first control information is used for scheduling data transmitted to a second User Equipment; transmitting, to the second User Equipment, the first control information based on the received DCI; and transmitting, to the second User Equipment, one or more data through the sidelink, the DCI is transmitted in subframe #n, the first control information is transmitted in subframe #n+k or in a specific sidelink subframe generated after the subframe #n+k, and the DCI includes second control information indicating a timing gap between a first data transmission and a second data transmission.

[Technical Effects]

According to an embodiment of the present invention, a timing on which a data transmission is started is clearly defined based on SA transmission timing or DCI transmission timing, and a problem of unable to transmit data when failing to receive information for a data transmission timing from a base station.

In addition, according to an embodiment of the present invention, Time-Resource Pattern for Transmission (T-RPT) pattern which is previously used in relation to a data transmission in Vehicle-to-Everything (V2X) communication is not used, but an indicator indicating spacing between data transmissions is used, and there is an effect of reducing a size of DCI.

Effects which may be obtained by the present invention are not limited to the aforementioned effects, and other technical effects not described above may be evidently understood by a person having ordinary skill in the art to which the present invention pertains from the following description.

[Description of Drawings]

The accompanying drawings, which are included to provide a further understanding of the present invention and are incorporated in and constitute a part of this application, illustrate embodiments of the present invention together with the detailed description serving to describe the principle of the present invention.

FIG. 1 illustrates a radio frame structure in a wireless communication system to which the present invention may be applied.

FIG. 2 is a diagram illustrating a resource grid for one downlink slot in a wireless communication system to which the present invention may be applied.

FIG. 3 illustrates a downlink subframe structure in a wireless communication system to which the present invention may be applied.

FIG. 4 illustrates an uplink subframe structure in a wireless communication system to which the present invention may be applied.

FIG. 5 is a diagram for schematically describing D2D communication in a wireless communication system to which the present invention may be applied.

FIG. 6 illustrates various scenarios of D2D communication in a wireless communication system to which the method proposed in the present disclosure may be applied.

FIG. 7 illustrates protocol stack for Sidelink communication.

FIG. 8 illustrates control plane protocol stack for one-to-one Sidelink communication to which the present invention may be applied.

FIG. 9 is a diagram for describing distributed discovery resource allocation scheme in a wireless communication system supporting Sidelink.

FIG. 10 illustrates Sidelink operation procedure in Sidelink communication Mode 1 by a control of an eNB and a method for performing Sidelink communication by transmitting and receiving the related information.

FIG. 11 illustrates a method for transmitting downlink control information for Sidelink communication between UEs in a wireless communication system supporting Sidelink.

FIG. 12 illustrates a type of V2X application to which the present invention may be applied.

FIG. 13 illustrates broadcast based V2V communication to which the present invention may be applied.

FIG. 14 illustrates examples of V2X operation mode based on only PC5 interface.

FIG. 15 illustrates examples of V2X operation mode based on only Uu interface.

FIG. 16 illustrates examples of V2X operation mode based on both of Uu interface and PC5 interface.

FIG. 17 illustrates examples of scheduling scheme applicable to V2V Sidelink communication.

FIG. 18 illustrates an example of SA transmission scheme.

FIG. 19 illustrates an operation flowchart for a first UE to transmit and receive data in a wireless communication system supporting Vehicle-to-Everything (V2X).

FIG. 20 illustrates a method for determining a transmission timing of data using T-RPT pattern proposed in the present disclosure.

FIG. 21 illustrates another method for determining a transmission timing of data using T-RPT pattern proposed in the present disclosure.

FIG. 22 illustrates another method for determining a transmission timing of data using T-RPT pattern proposed in the present disclosure.

FIG. 23 is a flowchart illustrating an example of a method for transmitting and receiving data in V2X Sidelink communication proposed in the present disclosure.

FIG. 24 illustrates a block diagram of a wireless communication device to which the methods proposed in the present disclosure may be applied.

FIG. 25 illustrates a block diagram of a wireless communication apparatus according to an embodiment of the present invention.

[Best Mode for Invention]

Hereinafter, preferred embodiments of the present invention will be described in detail with reference to the accompanying drawings. A detailed description to be disclosed below together with the accompanying drawing is to describe embodiments of the present invention and not to describe a unique embodiment for carrying out the present invention. The detailed description below includes details in order to provide a complete understanding. However, those skilled in the art know that the present invention can be carried out without the details.

In some cases, in order to prevent a concept of the present invention from being ambiguous, known structures and devices may be omitted or may be illustrated in a block diagram format based on core function of each structure and device.

In the specification, a base station means a terminal node of a network directly performing communication with a terminal. In the present document, specific operations described to be performed by the base station may be performed by an upper node of the base station in some cases. That is, it is apparent that in the network constituted by multiple network nodes including the base station, various operations performed for communication with the terminal may be performed by the base station or other network nodes other than the base station. A base station (BS) may be generally substituted with terms such as a fixed station, Node B, evolved-NodeB (eNB), a base transceiver system (BTS), an access point (AP), and the like. Further, a 'terminal' may be fixed or movable and be substituted with terms such as user equipment (UE), a mobile station (MS), a user terminal (UT), a mobile subscriber station (MSS), a subscriber station (SS), an advanced mobile station (AMS), a wireless terminal (WT), a Machine-Type Communication (MTC) device, a Machine-to-Machine (M2M) device, a Device-to-Device (D2D) device, and the like.

Hereinafter, a downlink means communication from the base station to the terminal and an uplink means communication from the terminal to the base station. In the downlink, a transmitter may be a part of the base station and a receiver may be a part of the terminal. In the uplink, the transmitter may be a part of the terminal and the receiver may be a part of the base station.

Specific terms used in the following description are provided to help appreciating the present invention and the use of the specific terms may be modified into other forms within the scope without departing from the technical spirit of the present invention.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC- FDMA), non-orthogonal multiple access (NOMA), and the like. The CDMA may be implemented by radio technology universal terrestrial radio access (UTRA) or CDMA2000. The TDMA may be implemented by radio technology such as global system for mobile communications (GSM)/general packet radio service (GPRS)/enhanced data rates for GSM Evolution (EDGE). The OFDMA may be implemented as radio technology such as IEEE 802.11(Wi-Fi), IEEE 802.16 (WiMAX), IEEE 802-20, E-UTRA (Evolved UTRA), and the like. The UTRA is a part of a universal mobile telecommunication system (UMTS). 3rd generation partnership project (3GPP) long term evolution (LTE) as a part of an evolved UMTS (E-UMTS) using evolved-UMTS terrestrial radio access (E-UTRA) adopts the OFDMA in a downlink and the SC-FDMA in an uplink. LTE-advanced (A) is an evolution of the 3GPP LTE.

The embodiments of the present invention may be based on standard documents disclosed in at least one of IEEE 802, 3GPP, and 3GPP2 which are the wireless access systems. That is, steps or parts which are not described to definitely show the technical spirit of the present invention among the embodiments of the present invention may be based on the documents. Further, all terms disclosed in the document may be described by the standard document.

3GPP LTE/LTE-A is primarily described for clear description, but technical features of the present invention are not limited thereto.


**(Terminology and definition)**


Carrier frequency: Center frequency of the cell

Cell: Combination of downlink and optionally uplink resources. The linking between the carrier frequency of the downlink resources and the carrier frequency of the uplink resources is indicated in the system information transmitted on the downlink resources.

Frequency layer: Set of cells with the same carrier frequency

Sidelink: UE to UE interface for Sidelink communication, V2X Sidelink communication and Sidelink discovery

Sidelink Control period, SC period: Period over which resources are allocated in a cell for Sidelink control information and Sidelink data transmissions

Sidelink communication: AS functionality enabling ProSe Direct Communication between two or more nearby UEs, using E-UTRA technology but not traversing any network node

Sidelink discovery: AS functionality enabling ProSe Direct Discovery using E-UTRA technology but not traversing any network node

Timing Advance Group, TAG: A group of serving cells that is configured by RRC and that, for the cells with an UL configured, use the same timing reference cell and the same Timing Advance value

V2X Sidelink communication: AS functionality enabling V2X Communication between nearby UEs, using E-UTRA technology but not traversing any network node


The following acronyms are applied for an object of the present invention.

ACK Acknowledgement
ARQ Automatic Repeat Request
CC Component Carrier
C-RNTICell RNTI
DCCH Dedicated Control Channel
DL Downlink
DwPTS Downlink Pilot Time Slot
eNB E-UTRAN NodeB
EPC Evolved Packet Core
EPS Evolved Packet System
E-RAB E-UTRAN Radio Access Bearer
E-UTRA Evolved UTRA
E-UTRAN Evolved UTRAN
FDD Frequency Division Duplex
FDM Frequency Division Multiplexing
LTE Long Term Evolution
MAC Medium Access Control
MCS Modulation and Coding Scheme
OFDM Orthogonal Frequency Division Multiplexing
OFDMA Orthogonal Frequency Division Multiple Access
ProSe Proximity based Services
PSBCH Physical Sidelink Broadcast CHannel
PSCCHPhysical Sidelink Control CHannel
PSDCHPhysical Sidelink Discovery CHannel

PSK Pre-Shared Key
PSSCH Physical Sidelink Shared CHannel
PUCCH Physical Uplink Control CHannel
PUSCHPhysical Uplink Shared CHannel
QoS Quality of Service
RRC Radio Resource Control
SI System Information
SIB System Information Block
SL-BCH Sidelink Broadcast Channel
SL-DCH Sidelink Discovery Channel
SL-RNTI Sidelink RNTI
SL-SCH Sidelink Shared Channel
STCH Sidelink Traffic Channel
TB Transport Block
TDD Time Division Duplex
TDM Time Division Multiplexing
TTI Transmission Time Interval
UE User Equipment
UL Uplink
UM Unacknowledged Mode
V2I Vehicle-to-Infrastructure
V2N Vehicle-to-Network
V2P Vehicle-to-Pedestrian
V2V Vehicle-to-Vehicle
V2X Vehicle-to-Everything

**General system**

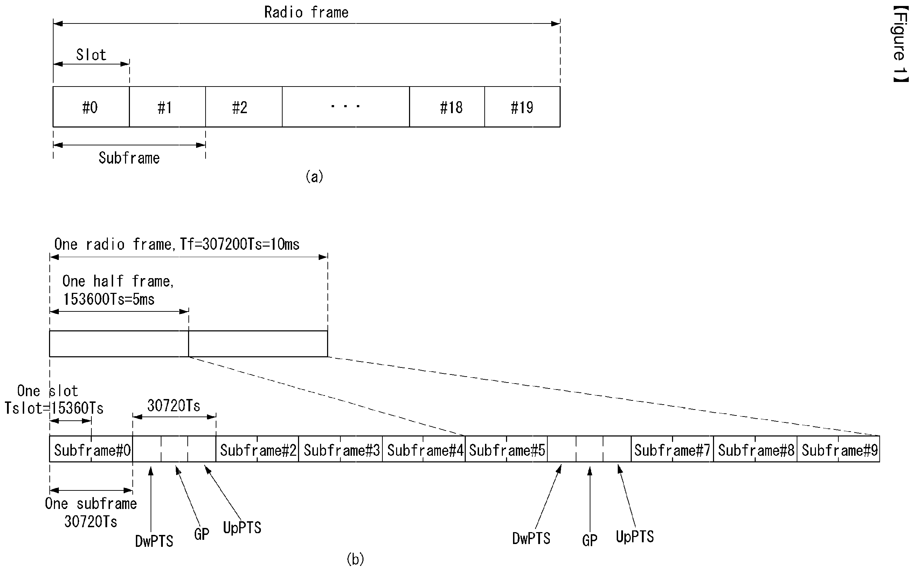

FIG. 1 illustrates a structure a radio frame in a wireless communication system to which the present invention can be applied.

In 3GPP LTE/LTE-A, radio frame structure type 1 may be applied to frequency division duplex (FDD) and radio frame structure type 2 may be applied to time division duplex (TDD) are supported.

In FIG. 1, the size of the radio frame in the time domain is represented by a multiple of a time unit of $T\_s = 1 / (15000 * 2048)$. The downlink and uplink transmissions are composed of radio frames having intervals of $T\_f = 307200 * T\_s = 10ms$.

FIG. 1(a) illustrates the type 1 radio frame structure. The type 1 radio frame may be applied to both full duplex FDD and half duplex FDD.

The radio frame includes 10 subframes. One radio frame includes 20 slots each having a length of $T\_slot=15360*T\_s=0.5$ ms. Indices 0 to 19 are assigned to the respective slots. One subframe includes two contiguous slots in the time domain, and a subframe i includes a slot 2i and a slot 2i+1. The time taken to send one subframe is called a transmission time interval (TTI). For example, the length of one subframe may be 1 ms, and the length of one slot may be 0.5 ms.

In FDD, uplink transmission and downlink transmission are classified in the frequency domain. There is no restriction to full duplex FDD, whereas a UE is unable to perform transmission and reception at the same time in a half duplex FDD operation.

One slot includes a plurality of orthogonal frequency division multiplexing (OFDM) symbols in the time domain and includes a plurality of resource blocks (RBs) in the frequency domain. An OFDM symbol is for expressing one symbol period because 3GPP LTE uses OFDMA in downlink. The OFDM symbol may also be called an SC-FDMA symbol or a symbol period. The resource block is a resource allocation unit and includes a plurality of contiguous subcarriers in one slot.

FIG. 1(b) illustrates the type 2 radio frame structure. The type 2 radio frame structure includes 2 half frames each having a length of $153600*T\_s=5$ ms. Each of the half frames includes 5 subframes each having a length of $30720*T\_s=1$ ms.

In the type 2 radio frame structure of a TDD system, an uplink-downlink configuration is a rule showing how uplink and downlink are allocated (or reserved) with respect to all of subframes. Table 1 represents the uplink-downlink configuration.

[Table 1]

| Uplink-Downlink configuration | Downlink-to-Uplink Switch-point periodicity | Subframe number | | | | | | | | | |
|---|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

Referring to Table 1, "D" indicates a subframe for downlink transmission, "U" indicates a subframe for uplink transmission, and "S" indicates a special subframe including the three fields of a downlink pilot time slot (DwPTS), a guard period (GP), and an uplink pilot time slot (UpPTS) for each of the subframes of the radio frame.

The DwPTS is used for initial cell search, synchronization or channel estimation by a UE. The UpPTS is used for an eNB to perform channel estimation and for a UE to perform uplink transmission synchronization. The GP is an interval for removing interference occurring in uplink due to the multipath delay of a downlink signal between uplink and downlink.

Each subframe i includes the slot 2i and the slot 2i+1 each having "T_siot=1536*T_s=0.5 ms."

The uplink-downlink configuration may be divided into seven types. The location and/or number of downlink subframes, special subframes, and uplink subframes are different in the seven types.

A point of time changed from downlink to uplink or a point of time changed from uplink to downlink is called a switching point. Switch-point periodicity means a cycle in which a form in which an uplink subframe and a downlink subframe switch is repeated in the same manner. The switch-point periodicity supports both 5 ms and 10 ms. In the case of a cycle of the 5 ms downlink-uplink switching point, the special subframe S is present in each half frame. In the case of the cycle of the 5 ms downlink-uplink switching point, the special subframe S is present only in the first half frame.

In all of the seven configurations, No. 0 and No. 5 subframes and DwPTSs are an interval for only downlink transmission. The UpPTSs, the subframes, and a subframe subsequent to the subframes are always an interval for uplink transmission.

Both an eNB and a UE may be aware of such uplink-downlink configurations as system information. The eNB may notify the UE of a change in the uplink-downlink allocation state of a radio frame by sending only the index of configuration information whenever uplink-downlink configuration information is changed. Furthermore, the configuration information is a kind of downlink control information. Like scheduling information, the configuration information may be transmitted through a physical downlink control channel (PDCCH) and may be transmitted to all of UEs within a cell in common through a broadcast channel as broadcast information.

Table 2 represents a configuration (i.e., the length of a DwPTS/GP/UpPTS) of the special subframe.

[Table 2]

| Special subframe configuration | Normal cyclic prefix in downlink | | | Extended cyclic prefix in downlink | | |
| --- | --- | --- | --- | --- | --- | --- |
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

The structure of the radio frame according to the example of FIG. 1 is only one example. The number of subcarriers included in one radio frame, the number of slots included in one subframe, and the number of OFDM symbols included in one slot may be changed in various manners.

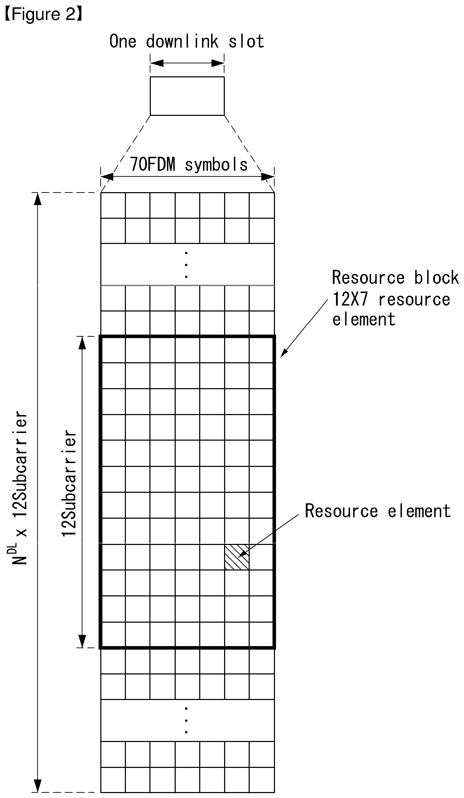

FIG. 2 is a diagram illustrating a resource grid for one downlink slot in the wireless communication system to which the present invention can be applied.

Referring to FIG. 2, one downlink slot includes the plurality of OFDM symbols in the time domain. Herein, it is exemplarily described that one downlink slot includes 7 OFDM symbols and one resource block includes 12 subcarriers in the frequency domain, but the present invention is not limited thereto.

Each element on the resource grid is referred to as a resource element and one resource block includes 12 x 7 resource elements. The number of resource blocks included in the downlink slot, NDL is subordinated to a downlink transmission bandwidth.

A structure of the uplink slot may be the same as that of the downlink slot.

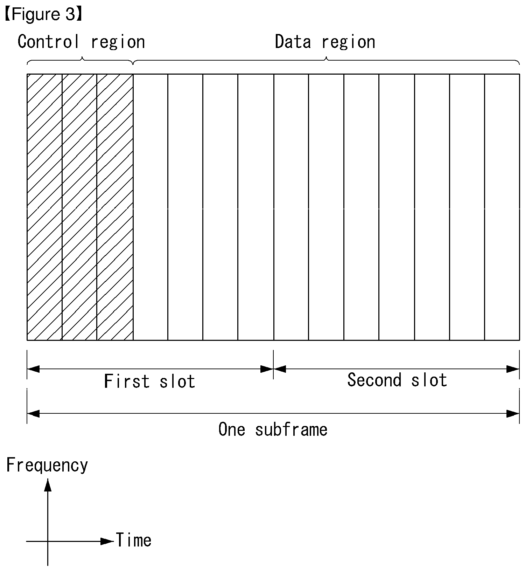

FIG. 3 illustrates a structure of a downlink subframe in the wireless communication system to which the present invention can be applied.

Referring to FIG. 3, a maximum of three former OFDM symbols in the first slot of the sub frame is a control region to which control channels are allocated and residual OFDM symbols is a data region to which a physical downlink shared channel (PDSCH) is allocated. Examples of the downlink control channel used in the 3GPP LTE include a Physical Control Format Indicator Channel (PCFICH), a Physical Downlink Control Channel (PDCCH), a Physical Hybrid-ARQ Indicator Channel (PHICH), and the like.

The PFCICH is transmitted in the first OFDM symbol of the subframe and transports information on the number (that is, the size of the control region) of OFDM symbols used for transmitting the control channels in the subframe. The PHICH which is a response channel to the uplink transports an Acknowledgement (ACK)/Not-Acknowledgement (NACK) signal for a hybrid automatic repeat request (HARQ). Control information transmitted through a PDCCH is referred to as downlink control information (DCI). The downlink control information includes uplink resource allocation information, downlink resource allocation information, or an uplink transmission (Tx) power control command for a predetermined terminal group.

The PDCCH may transport A resource allocation and transmission format (also referred to as a downlink grant) of a downlink shared channel (DL-SCH), resource allocation information (also referred to as an uplink grant) of an uplink shared channel (UL-SCH), paging information in a paging channel (PCH), system information in the DL-SCH, resource allocation for an upper-layer control message such as a random access response transmitted in the PDSCH, an aggregate of transmission power control commands for individual terminals in the predetermined terminal group, a voice over IP (VoIP). A plurality of PDCCHs may be transmitted in the control region and the terminal may monitor the plurality of PDCCHs. The PDCCH is constituted by one or an aggregate of a plurality of continuous control channel elements (CCEs). The CCE is a logical allocation wise used to provide a coding rate depending on a state of a radio channel to the PDCCH. The CCEs correspond to a plurality of resource element groups. A format of the PDCCH and a bit number of usable PDCCH are determined according to an association between the number of CCEs and the coding rate provided by the CCEs.

The base station determines the PDCCH format according to the DCI to be transmitted and attaches the control information to a cyclic redundancy check (CRC) to the control information. The CRC is masked with a unique identifier (referred to as a radio network temporary identifier (RNTI)) according to an owner or a purpose of the PDCCH. In the case of a PDCCH for a specific terminal, the unique identifier of the terminal, for example, a cell-RNTI (C-RNTI) may be masked with the CRC. Alternatively, in the case of a PDCCH for the paging message, a paging indication identifier, for example, the CRC may be masked with a paging-RNTI (P-RNTI). In the case of a PDCCH for the system information, in more detail, a system information block (SIB), the CRC may be masked with a system information identifier, that is, a system information (SI)-RNTI. The CRC may be masked with a random access (RA)-RNTI in order to indicate the random access response which is a response to transmission of a random access preamble.

Enhanced PDCCH (EPDCCH) carries UE-specific signaling. The EPDCCH is located in a physical resource block (PRB) that is set to be terminal specific. In other words, as described above, the PDCCH may be transmitted in up to three OFDM symbols in the first slot in the subframe, but the EPDCCH may be transmitted in a resource region other than the PDCCH. The time (i.e., symbol) at which the EPDCCH in the subframe starts may be set in the UE through higher layer signaling (e.g., RRC signaling, etc.).

The EPDCCH is a transport format, a resource allocation and HARQ information associated with the DL-SCH and a transport format, a resource allocation and HARQ information associated with the UL-SCH, and resource allocation information associated with SL-SCH (Sidelink Shared Channel) and PSCCH Information, and so on. Multiple EPDCCHs may be supported and the terminal may monitor the set of EPCCHs.

The EPDCCH may be transmitted using one or more successive advanced CCEs (ECCEs), and the number of ECCEs per EPDCCH may be determined for each EPDCCH format.

Each ECCE may be composed of a plurality of enhanced resource element groups (EREGs). EREG is used to define the mapping of ECCE to RE. There are 16 EREGs per PRB pair. All REs are numbered from 0 to 15 in the order in which the frequency increases, except for the RE that carries the DMRS in each PRB pair.

The UE may monitor a plurality of EPDCCHs. For example, one or two EPDCCH sets may be set in one PRB pair in which the terminal monitors the EPDCCH transmission.

Different coding rates may be realized for the EPCCH by merging different numbers of ECCEs. The EPCCH may use localized transmission or distributed transmission, which may result in different mapping of the ECCE to the REs in the PRB.

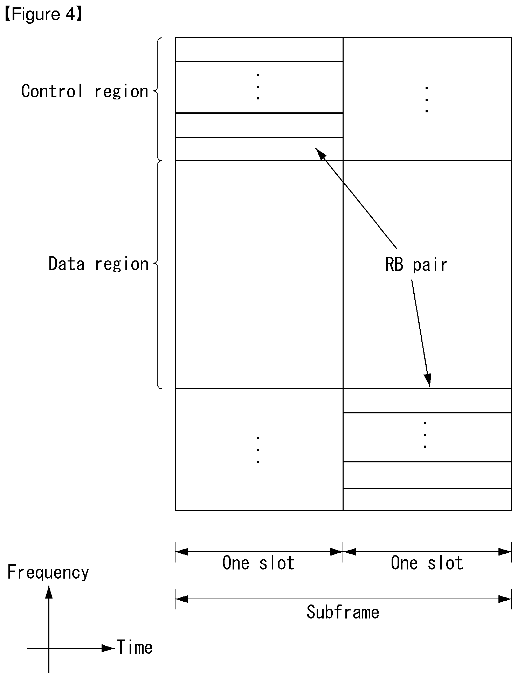

FIG. 4 illustrates a structure of an uplink subframe in the wireless communication system to which the present invention can be applied.

Referring to FIG. 4, the uplink subframe may be divided into the control region and the data region in a frequency domain. A physical uplink control channel (PUCCH) transporting uplink control information is allocated to the control region. A physical uplink shared channel (PUSCH) transporting user data is allocated to the data region. One terminal does not simultaneously transmit the PUCCH and the PUSCH in order to maintain a single carrier characteristic.

A resource block (RB) pair in the subframe are allocated to the PUCCH for one terminal. RBs included in the RB pair occupy different subcarriers in two slots, respectively. The RB pair allocated to the PUCCH is frequency-hopped in a slot boundary.

## Device-to-device (D2D) communication

A device-to-device (D2D) communication or sidelink technology refers to a method of directly communicating with each other by geographically close UEs without the intervention of infrastructure, such as a base station. In the D2D communication technology, a technology chiefly using a non-licensed frequency band, such as already commercialized Wi-Fi Direct and Bluetooth, has been developed. However, for the purpose of improving frequency use efficiency of the cellular system, a D2D communication technology using a licensed frequency band has been developed and standardization thereof is performed.

In general, D2D communication is limitedly used as a term to refer to communication between things and thing intelligent communication. However, D2D communication in the present invention may include all types of communication between simple devices having a communication function and various types of devices having a communication function, such as smartphones or personal computers.

D2D communication may also be called a sidelink or sidelink transmission.

A sidelink includes sidelink discovery, sidelink communication, and V2X sidelink communication between UEs.

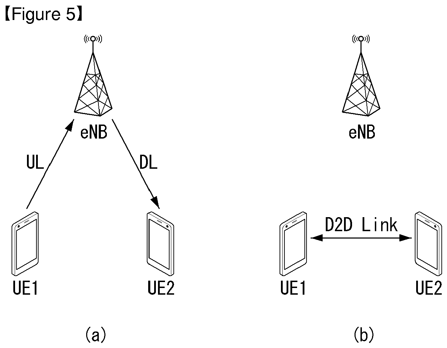

FIG. 5 is a diagram for conceptually illustrating D2D communication in a wireless communication system to which the present invention may be applied.

FIG. 5(a) illustrates a communication method based on the existing eNB. A UE 1 may transmit data to the eNB on uplink, and the eNB may transmit data to a UE 2 on downlink. Such a communication method may be called an indirect communication method through an eNB. In the indirect communication method, an Xn link (link between eNBs or link between an eNB and a relay and may be called a backhaul link), that is, a link defined in the existing wireless communication system and/or an Uu link (link between an eNB and a UE or link between a relay and a UE, and may be called an access link) may be related.

FIG. 5(b) illustrates a UE-to-UE communication method as an example of D2D communication. A data exchange between UEs may be performed without the intervention of an eNB. Such a communication method may be called a direct communication method between devices. The D2D direct communication method has advantages in that latency is reduced compared to an indirect communication method through the existing eNB and less radio resources are used.

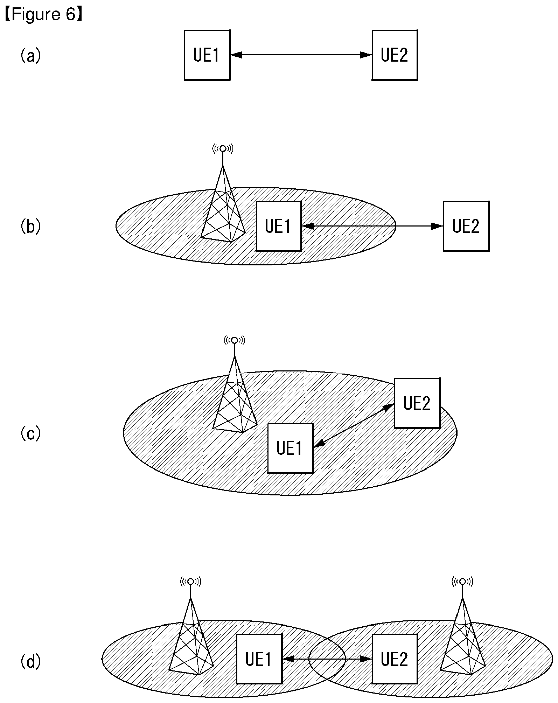

FIG. 6 illustrates examples of various scenarios D2D communication to which a method proposed in this specification may be applied.

The scenario of D2D communication may be basically divided into (1) Out-of-Coverage Network, (2) Partial-Coverage Network and (3) In-Coverage Network depending on whether a UE 1 and a UE 2 are located in-coverage/out-of-coverage.

In-Coverage Network may be divided into In-Coverage-Single-Cell and In-Coverage-Multi-Cell based on the number of cells corresponding to coverage of an eNB.

FIG. 6(a) illustrates an example of the Out-of-Coverage Network scenario of D2D communication. The Out-of-Coverage Network scenario means that D2D UEs perform D2D communication without control of an eNB. From FIG. 6(a), it may be seen that only a UE 1 and a UE 2 are present and the UE 1 and the UE 2 perform direct communication.

FIG. 6(b) illustrates an example of the Partial-Coverage Network scenario of D2D communication. The Partial-Coverage Network scenario means that a D2D UE in coverage of a network and a D2D UE out of coverage of the network perform D2D communication. From FIG. 6(b), it may be seen that a UE 1 in coverage of a network and a UE 2 out of coverage of the network communicate with each other.

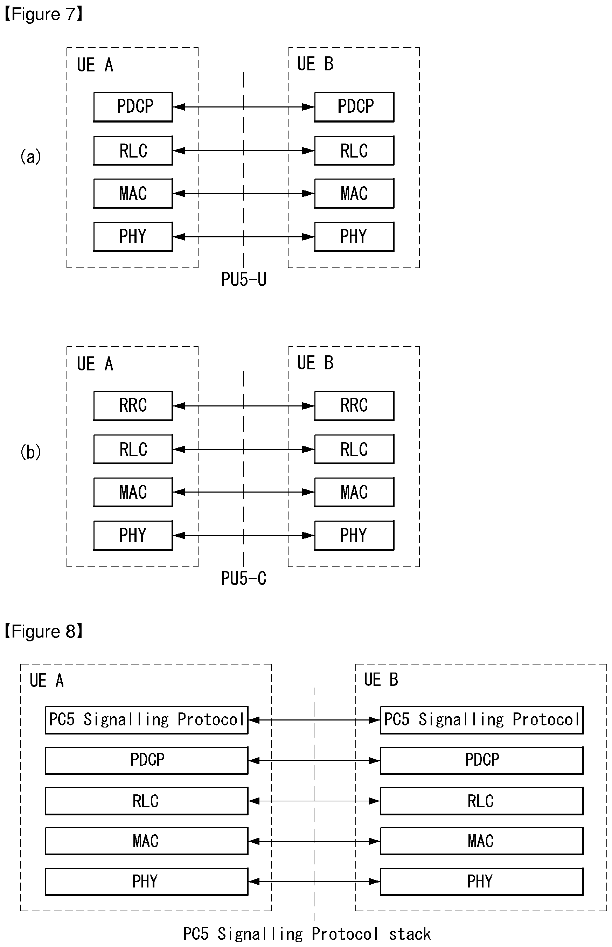

FIG. 6(c) illustrates an example of the In-Coverage-Single-Cell scenario. FIG. 8(d) illustrates an example of the In-Coverage-Multi-Cell scenario. The In-Coverage Network scenario means that D2D UEs perform D2D communication through control of an eNB in coverage of a network. In FIG. 6(c), a UE 1 and a UE 2 are located in the same network coverage (or cell) and perform D2D communication under the control of an eNB.

In FIG. 6(d), a UE 1 and a UE 2 are located in coverage of networks, but are located in coverage of different networks. Furthermore, the UE 1 and the UE 2 perform D2D communication under the control of eNBs managing respective network coverages.

Hereinafter, D2D communication or a sidelink are described more specifically.

D2D communication may operate in the scenarios shown in FIG. 6. In general, D2D communication may operate in coverage of a network and out of coverage of a network. A link used for direct communication between UEs may be referred to as a sidelink, directlink or D2D link, but is collectively called a sidelink, for convenience of description.

Sidelink transmission may operate in an uplink spectrum in the case of FDD, and may operate in an uplink (or downlink) subframe in the case of TDD. For the multiplexing sidelink transmission and uplink transmission, time division multiplexing (TDM) may be used.

Depending on the capability of a UE, sidelink transmission and uplink transmission do not occur in a specific UE at the same time. Sidelink transmission does not occur in an uplink subframe used for uplink transmission or a sidelink subframe overlapping an UpPTS partially or fully. Furthermore, sidelink transmission and downlink transmission do not occur at the same time. Furthermore, the transmission and reception of a sidelink do not occur at the same time.

The structure of a physical resource used for sidelink transmission may be the same as the structure of an uplink physical resource. However, the last symbol of a sidelink subframe has a guard period and is not used for sidelink transmission.

A sidelink subframe may have an extended CP or a normal CP.

Sidelink communication may be basically divided into sidelink discovery, sidelink communication, sidelink synchronization, and vehicle-to-everything (V2X) sidelink communication.

Sidelink communication is communication mode in which a UE can perform direct communication through a PC5 interface. The communication mode is supported when a UE is served by an E-UTRAN and when a UE is out of coverage of E-UTRA.

Only UEs permitted to be used for a public safety operation may perform sidelink communication.

In order to perform synchronization for an out-of-coverage operation, a UE(s) may operate as a synchronization source by transmitting a sidelink broadcast control channel (SBCCH) and a synchronization signal.

An SBCCH delivers the most important system information necessary to receive a different sidelink channel and a signal. The SBCCH is transmitted in a fixed period of 40 ms along with a synchronization signal. When a UE is in network coverage, the contents of the SBCCH are derived or obtained from a parameter signaled by an eNB.

When a UE is out of coverage, if the UE selects another UE as a synchronization criterion, the contents of an SBCCH are derived from a received SBCCH. If not, the UE uses a pre-configured parameter. A system information block (SIB) 18 provides a synchronization signal and resource information for SBCCH transmission.

For an out-of-coverage operation, two pre-configured subframes are present every 40ms. A UE receives a synchronization signal and SBCCH in one subframe. When the UE becomes a synchronization source based on a defined criterion, it transmits a synchronization signal and SBCCH in another subframe.

A UE performs sidelink communication on defined subframes during a sidelink control period. The sidelink control period is the period in which resources allocated to a cell occur for sidelink control information and sidelink data transmission. The UE transmits sidelink control information and sidelink data within the sidelink control period.

The sidelink control information indicates a layer 1 ID and transmission characteristics (e.g., MCS, the location of a resource for a sidelink control period and timing alignment).

A UE performs transmission/reception through the Uu and PC5 in order of the following lower priority if a sidelink discovery gap has not been configured.

- Uu transmission/reception (highest priority);
- PC5 sidelink communication transmission and reception;
- PC5 sidelink discovery announcement/monitoring (lowest priority).

A UE performs transmission and reception through the Uu and PC5 in order of the following lower priority if a sidelink discovery gap has been configured:

- Uu transmission/reception for RACH;
- PC5 sidelink discovery announcement during a Sidelink Discovery Gap for transmission;
- Non-RACH Uu transmission;
- PC5 sidelink discovery monitoring during a Sidelink Discovery Gap for reception;
- Non-RACH Uu reception;
- PC5 sidelink communication transmission and reception.

**Sidelink radio protocol structure**

A UE radio protocol structure for sidelink communication with respect to a user plane and a control plane is described.

FIG. 7 illustrates a protocol stack for sidelink communication.

Specifically, FIG. 7(a) illustrates a protocol stack for a user plane in which a PDCP, RLC and MAC sublayer (end in another UE) perform functions on a user plane. The access layer protocol stack of a PC5 interface includes a PDCP, RLC, MAC and PHY as shown in FIG. 7(a).

User plane detailed information of sidelink communication:

- There is no HARQ feedback for sidelink communication.
- RLC UM is used for sidelink communication.
- A receiver UE needs to maintain at least one RLC UM entity every transmission peer UE.
- A reception RLC UM entity used for sidelink communication does not need to be configured prior to the reception of a first RLC UMD PDU.
- ROHC unidirectional mode is used for the header compression of a PDCP for additional communication.

A UE may configure a plurality of logical channels. An LCID included in a MAC subheader uniquely identifies a logical channel within the range of one Source Layer-2 ID and Destination Layer-2 ID combination. A parameter for logical channel priority is not configured.

An access layer (AS) is provided along with a ProSe Per-Packet Priority (PPPP) of a protocol data unit transmitted through the PC5 interface in a higher layer. There is a PPPP related to each logical channel.

A UE configures and does not maintain a logical connection to receiver UEs prior to one-to-multiple sidelink communication. A higher layer configures and maintains a logical connection for one-to-one sidelink communication, including a ProSe UE-to-Network Relay task.

FIG. 7(b) illustrates a control plane protocol stack for an SBCCH to which the present invention may be applied. In the PC5 interface, an access layer protocol stack for an SBCCH includes RRC, RLC, MAC and PHY as in FIG. 7(b).

A control plane for configuring, maintaining and releasing a logical connection for one-to-one sidelink communication is shown in FIG. 8.

FIG. 8 illustrates a control plane protocol stack for one-to-one sidelink communication to which the present invention may be applied.

**Sidelink discovery**

In sidelink communication, since a plurality of transmitter/receiver UEs is distributed at a given location, a sidelink discovery procedure for confirming the presence of surrounding UEs is necessary before a specific UE perform sidelink communication with surrounding UEs. Furthermore, sidelink discovery may be used to confirm the presence of surrounding UEs and used for various commercial purposes, such as advertising, issuing coupons and finding friends, with respect to UEs within a proximity area.

Sidelink discovery may be applied within network coverage (including inter-cell, intra-cell). In inter-cell discovery, both synchronous and asynchronous cell deployments may be taken into consideration.

In this case, a signal (or message) periodically transmitted by UEs for sidelink discovery may be referred to as a discovery message, discovery signal, a beacon, etc. Hereinafter, a signal periodically transmitted by UEs for sidelink discovery is collectively called a discovery message, for convenience of description.

If a UE 1 has the role of discovery message transmission, the UE 1 transmits a discovery message, and a UE 2 receives the discovery message. The transmission and reception roles of the UE 1 and the UE 2 may be changed. Transmission from the UE 1 may be received by one or more UE(s), such as the UE 2.

A discovery message may include a single MAC PDU. In this case, the single MAC PDU may include a UE ID and an application ID.

A physical sidelink discovery channel (PSDCH) may be defined as a channel in which a discovery message is transmitted. The structure of a PSDCH channel may reuse a PUSCH structure.

Two types (sidelink discovery type 1 and sidelink discovery type 2B) may be used as a resource allocation method for sidelink discovery.

In the case of the sidelink discovery type 1, an eNB may allocate a resource for discovery message transmission in a non-UE-specific manner.

Specifically, a radio resource pool (i.e., discovery pool) for discovery transmission and reception, including a plurality of subframe sets and a plurality of resource block sets, is allocated within a specific period (hereinafter "discovery period"). A discovery transmitter UE randomly selects a specific resource within the radio resource pool and then transmits a discovery message.

Such a periodical discovery resource pool may be allocated for discovery signal transmission in a semi-static manner. Configuration information of a discovery resource pool for discovery transmission includes a discovery period, a subframe set which may be used for the transmission of a discovery signal within a discovery period, and resource block set information.

Such configuration information of a discovery resource pool may be transmitted to a UE by higher layer signaling. In the case of an in-coverage UE, a discovery resource pool for discovery transmission is configured by an eNB, and a UE may be notified of the discovery resource pool through RRC signaling (e.g., a system information block (SIB)).

A discovery resource pool allocated for discovery within one discovery period may be multiplexed with a time-frequency resource block having the same size through TDM and/or FDM. A time-frequency resource block having the same size may be referred to as a "discovery resource." A discovery resource may be divided as one subframe unit, and may include two physical resource blocks (PRBs) per slot in each subframe. One discovery resource may be used for the transmission of a discovery MAC PDU by one UE.

Furthermore, a UE may repeatedly transmit a discovery signal within a discovery period for the transmission of one transport block. The transmission of a MAC PDU transmitted by one UE may be repeated (e.g., repeated four times) contiguously or non-contiguously within a discovery period (i.e., radio resource pool). The number of transmissions of a discovery signal for one transport block may be transmitted by a UE through higher layer signaling.

A UE randomly selects the first discovery resource in a discovery resource set which may be used for the repeated transmission of a MAC PDU. Other discovery resources may be determined in relation to the first discovery resource. For example, a specific pattern may be pre-configured, and a next discovery resource may be determined according to a pre-configured pattern based on the location of a discovery resource first selected by a UE. Furthermore, the UE may randomly select each discovery resource within a discovery resource set which may be used for the repeated transmission of a MAC PDU.

In the sidelink discovery type 2, a resource for discovery message transmission is allocated in a UE-specific manner. Type 2 is subdivided into Type 2A and Type 2B. Type 2A is a method in which an eNB allocates a resource at each transmission instance of a discovery message by a UE within a discovery period. Type 2B is a method of allocating a resource in a semi-persistent manner.

In the case of the sidelink discovery type 2B, a RRC_CONNECTED UE requests the allocation of a resource for the transmission of a sidelink discovery message from an eNB through RRC signaling. Furthermore, the eNB may allocate the resource through RRC signaling. When the UE makes transition to an RRC_IDLE state or the eNB withdraws resource allocation through RRC signaling, the UE releases the most recently allocated transmission resource. As described above, in the case of the sidelink discovery type 2B, a radio resource may be allocated by RRC signaling, and the activation/deactivation of radio resources allocated by a PDCCH may be determined.

A radio resource pool for discovery message reception is configured by an eNB, and a UE may be notified of the radio resource pool using RRC signaling (e.g., a system information block (SIB)).

A discovery message receiver UE monitors both the discovery resource pools of the sidelink discovery type 1 and type 2 for discovery message reception.

A sidelink discovery method may be divided into a centralized discovery method assisted by a central node, such as an eNB, and a distributed discovery method for a UE autonomously to confirm the presence of a surrounding UE without the help of a central node.

In this case, in the case of the distributed discovery method, a dedicated resource may be periodically allocated separately from a cellular resource as a resource for a UE to transmit and receive discovery messages.

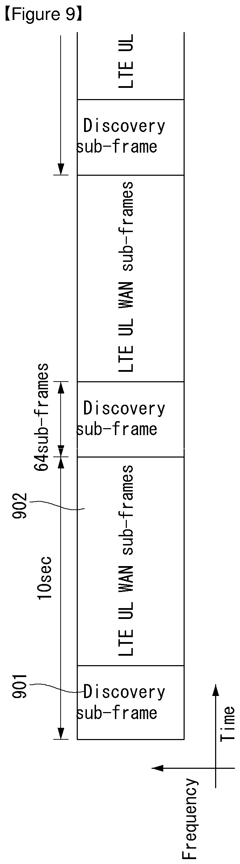

FIG. 9 is a diagram for illustrating a distributed discovery resource allocation method in a wireless communication system supporting a sidelink.

Referring to FIG. 9, in the distributed discovery method, a discovery subframe (i.e., "discovery resource pool") 901 for discovery among all cellular uplink frequency-time resources is fixedly (or dedicatedly) allocated, and the remaining region may include the existing LTE uplink wide area network (WAN) subframe region 902. The discovery resource pool may include one or more subframes.

The discovery resource pool may be periodically allocated at a specific time interval (i.e., "discovery period" or "PSDCH period"). Furthermore, the discovery resource pool may be repeatedly configured within one discovery period.

FIG. 9 illustrates an example in which a discovery resource pool is allocated with a discovery period of 10 sec and 64 contiguous subframes are allocated in each discovery resource pool. However, the sizes of a discovery period and time/frequency resource of a discovery resource pool correspond to example, and the present invention is not limited thereto.

A UE autonomously selects a resource (i.e., "discovery resource") for transmitting its own discovery message within a dedicatedly allocated discovery pool, and transmits a discovery message through the selected resource.

**Sidelink communication**

The application area of sidelink communication also includes network edge-of-coverage in addition to in and out of network coverage (in-coverage, out-of-coverage). Sidelink communication may be used for purposes, such as public safety (PS).

If a UE 1 has the role of direct communication data transmission, the UE 1 transmits direct communication data, and a UE 2 receives direct communication data. The transmission and reception roles of the UE 1 and the UE 2 may be changed. Direct communication transmission from the UE 1 may be received by one or more UE(s), such as the UE 2.

Sidelink discovery and sidelink communication are not associated, but may be independently defined. That is, in groupcast and broadcast direct communication, sidelink discovery is not necessary. As described above, if sidelink discovery and sidelink direct communication are independently defined, UEs do not need to recognize an adjacent UE. In other words, in the case of groupcast and broadcast direct communication, all receiver UEs within a group do not need to be adjacent to each other.

A physical sidelink shared channel (PSSCH) may be defined as a channel in which sidelink communication data is transmitted. Furthermore, a physical sidelink control channel (PSCCH) may be defined as a channel in which control information for sidelink communication (e.g., scheduling assignment (SA) for sidelink communication data transmission, transmission format) is transmitted. A PSSCH and a PSCCH may reuse a PUSCH structure.

Two modes (Mode 1, Mode 2) may be used as a resource allocation method for sidelink communication.

Mode 1 refers to a method of an eNB to schedule resources, used to transmit data or control information for sidelink communication, with respect to a UE. In in-coverage, Mode 1 is applied.

An eNB configures a resource pool for sidelink communication. The eNB may deliver information on a resource pool for sidelink communication to the UE through higher layer signaling. In this case, the resource pool for sidelink communication may be divided into a control information pool (i.e., resource pool for transmitting a PSCCH) and a sidelink data pool (i.e., resource pool for transmitting a PSSCH).

When a transmitter UE requests a resource for transmitting control information and/or data from an eNB, the eNB schedules a control information and sidelink data transmission resource within a pool configured in the transmitter D2D UE using a PDCCH or ePDCCH. Accordingly, the transmitter UE transmits control information and sidelink data to a receiver UE using the scheduled (i.e., allocated) resource.

Specifically, the eNB may perform scheduling on a resource for transmitting control information (i.e., resource for transmitting a PSCCH) using a downlink control information (DCI) format 5 or a DCI format 5A, and may perform scheduling on a resource for transmitting sidelink data (i.e., resource for transmitting a PSSCH) using a sidelink control information (SCI) format 0 or an SCI format 1. In this case, the DCI format 5 includes some fields of the SCI format 0, and the DCI format 5A includes some fields of the SCI format 1.

In accordance with the above description, in the case of Mode 1, a transmitter UE needs to be in the RRC_CONNECTED state in order to perform sidelink communication. The transmitter UE transmits a scheduling request to an eNB. A buffer status report (BSR) procedure is performed so that an eNB can determine the amount of resources requested by the transmitter UE.

When receiver UEs monitor a control information pool and decode control information related thereto, they may selectively decode sidelink data transmission related to the corresponding control information. The receiver UE may not decode a sidelink data pool based on a result of the decoding of control information.

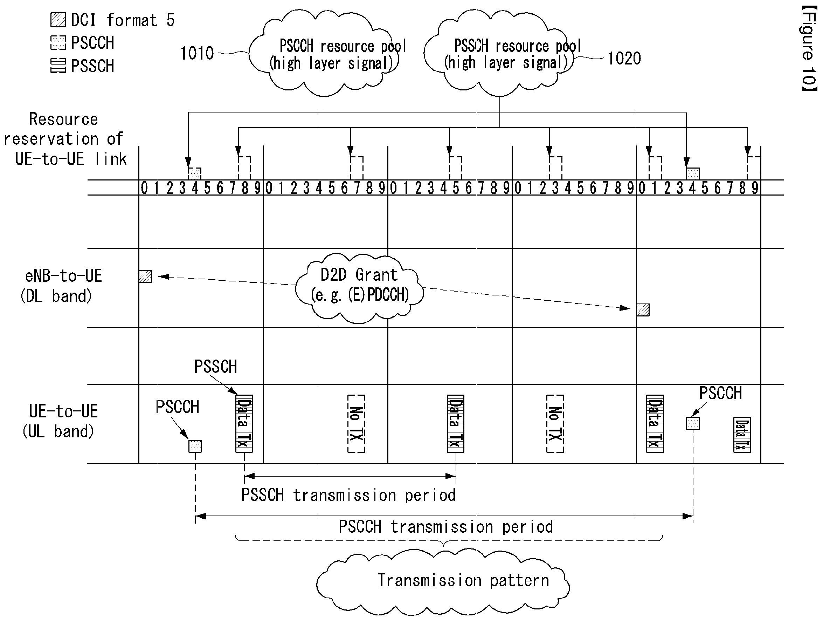

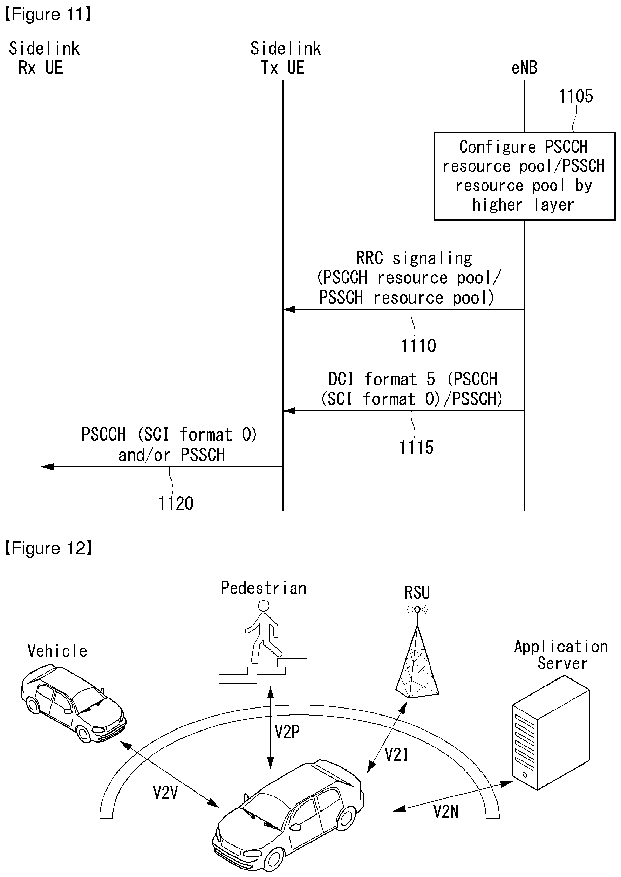

A detailed example and signaling procedure of the sidelink communication mode 1 are shown in FIGS. 10 and 11. In this case, as described above, control information related to sidelink communication is transmitted through a PSCCH, and data information related to sidelink communication is transmitted through a PSSCH.

FIG. 10 illustrates a method of performing a sidelink operational procedure in a sidelink communication mode 1 based on control of an eNB and sidelink communication by transmitting and receiving related information.

As shown in FIG. 10, a PSCCH resource pool 1010 and/or a PSSCH resource pool 1020 related to sidelink communication may be pre-configured. The pre-configured resource pool may be transmitted from an eNB to sidelink UEs through higher layer signaling (e.g., RRC signaling). In this case, the PSCCH resource pool and/or the PSSCH resource pool may mean a resource (i.e., dedicated resource) reserved for sidelink communication. In this case, the PSCCH is control information for scheduling the transmission of sidelink data (i.e., PSSCH), and may mean a channel in which the SCI format 0 is transmitted.

Furthermore, the PSCCH is transmitted according to a PSCCH period, and the PSSCH is transmitted according to a PSSCH period. The scheduling of the PSCCH is performed through the DCI format 5 (or DCI format 5A), and the scheduling of the PSSCH is performed through the SCI format 0 (or SCI format 1). The DCI format 5 may be referred to as a sidelink grant, and may be transmitted through a physical layer channel or MAC layer channel, such as a PDCCH or an EPDCCH.

In this case, the DCI format 5 includes resource information for a PSCCH (i.e., resource allocation information), a transmission power control (TPC) command for a PSCCH and PSSCH, a zero padding (ZP) bit(s) and some fields of the SCI format 0 (e.g., frequency hopping flag, resource block assignment and hopping resource allocation information, a time resource pattern (e.g., subframe pattern)).

Furthermore, the fields of the SCI format 0 is information related to the scheduling of a PSSCH, and includes fields, such as a frequency hopping flag, a time resource pattern, a modulation and coding scheme (MCS), a TA indication, and a group destination ID.

FIG. 11 illustrates a downlink control information transmission method for sidelink communication between UEs in a wireless communication system supporting sidelink communication. FIG. 11 is merely for convenience of description and does not limit the scope of the present invention.

Referring to FIG. 11, it is assumed that the DCI format 5 is used as a sidelink grant. If the DCI format 5A is used, in FIG. 11, the DCI format 5 is substituted with a DCI format 5A and the SCI format 0 may be substituted with the SCI format 1.

First, in step S1105, a PSCCH resource pool and/or a PSSCH resource pool related to a sidelink is configured by a higher layer.

Thereafter, in step S1110, an eNB transmits information on the PSCCH resource pool and/or the PSSCH resource pool to a sidelink UE through higher layer signaling (e.g., RRC signaling).

Thereafter, in step S1115, the eNB transmits control information, related to the transmission of a PSCCH (i.e., SCI format 0) and/or the transmission of a PSSCH (i.e., sidelink communication data), to a sidelink transmitter UE through the DCI format 5 respectively or together. The control information includes information scheduling of the PSCCH and/or the PSSCH in the PSCCH resource pool and/or the PSSCH resource pool. For example, resource allocation information, an MCS level, a time resource pattern, etc. may be included in the control information.

Thereafter, in step S1120, the sidelink transmitter UE transmits the PSCCH (i.e., SCI format 0) and/or PSSCH (i.e., sidelink communication data) to a sidelink receiver UE based on the information received in step S1115. In this case, the transmission of the PSCCH and the transmission of the PSSCH may be performed together, or the transmission of the PSSCH may be performed after the transmission of the PSCCH.

Meanwhile, although not shown in FIG. 11, the sidelink transmitter UE may request a transmission resource (i.e., PSSCH resource) for sidelink data from the eNB, and the eNB may schedule resources for the transmission of the PSCCH and the PSSCH. To this end, the sidelink transmitter UE transmits a scheduling request (SR) to the eNB, and a buffer status report (BSR) procedure may be performed so that the eNB can determine the amount of resources requested by the sidelink transmitter UE.

Sidelink receiver UEs may monitor a control information pool. When control information related thereto is decoded, the sidelink receiver UEs may selectively decode sidelink data transmission related to the corresponding control information.

In contrast, Mode 2 refers to a method of a UE to randomly select a specific resource in a resource pool in order to transmit data or control information for sidelink communication. In out-of-coverage and/or in-coverage, Mode 2 is applied.

In Mode 2, a resource pool for control information transmission and/or a resource pool for sidelink communication data transmission may be pre-configured or may be semi-statically configured. A UE is provided with a configured resource pool (time and frequency) and selects a resource for sidelink communication transmission in a resource pool. That is, the UE may select a resource for control information transmission in a control information resource pool in order to transmit control information. Furthermore, the UE may select a resource in a data resource pool for the sidelink communication data transmission.

Furthermore, in sidelink broadcast communication, control information is transmitted by a broadcasting UE. The control information explicitly and/or implicitly indicates the location of a resource for data reception in relation to a physical channel (i.e., PSSCH) that carries sidelink communication data.

**Sidelink synchronization**

A sidelink synchronization signal (sidelink synchronization sequence, sidelink SS) may be used for a UE to obtain time-frequency synchronization. In particular, in the case of out of coverage of a network, control of an eNB is impossible. A new signal and procedure for synchronization establishment between UEs may be defined.

A UE that periodically transmits a sidelink synchronization signal may be referred to as a sidelink synchronization source.

Each UE may have multiple physical-layer sidelink synchronization identities (IDs). The number of physical-layer sidelink synchronization IDs is 336 (i.e., 0 to 335). 336 physical-layer sidelink synchronization IDs may be divided into an in-network coverage part ID set (id_net set, 0 to 167) and an out-of-network coverage ID set (id_oon set, 168 to 335).

A sidelink synchronization signal includes a primary sidelink synchronization signal (PSSS) and a secondary sidelink synchronization signal (SSSS).

The PSSS is transmitted in two neighbor SC-FDMA symbols of the same subframe. In this case, in order to generate the PSSS, if physical-layer sidelink synchronization IDs are 0 to 167, a Zadoff-Chu sequence having a root index of 26 is used. In other cases, a Zadoff-Chu sequence having a root index of 37 is used.

In this case, a sequence configuring the PSSS is mapped to the resource elements of an antenna port 1020 in the first slot of a corresponding subframe according to Equation 1.

$$【\text{Equation 1}】$$

$$a_{k,l} = d_i(n), \qquad n = 0,...,61$$

$$k = n - 31 + \frac{N_{\text{RB}}^{\text{SL}} N_{\text{sc}}^{\text{RB}}}{2}$$

$$l = \begin{cases} 1,2 & \text{normal cyclic prefix} \\ 0,1 & \text{extended cyclic prefix} \end{cases}$$

Furthermore, the SSSS is transmitted in the two neighbor SC-FDMA symbols of the same subframe. In this case, in order to generate the SSSS, two sequences assuming a subframe 0, that is, $N_{\text{ID}}^{(1)} = N_{\text{ID}}^{\text{SL}} \bmod 168$ and $N_{\text{ID}}^{(2)} = \lfloor N_{\text{ID}}^{\text{SL}} / 168 \rfloor$ for transmission modes 1 and 2, and a subframe 5 for transmission modes 3 and 4, respectively, are used.

In this case, a sequence configuring the SSSS is mapped to resource elements for the antenna port 1020 in the second slot of a corresponding subframe according to Equation 2.

$$【\text{Equation 2}】$$

$$a_{k,l} = d_i(n), \qquad n = 0,...,61$$

$$k = n - 31 + \frac{N_{\text{RB}}^{\text{SL}} N_{\text{sc}}^{\text{RB}}}{2}$$

$$l = \begin{cases} 4,5 & \text{normal cyclic prefix} \\ 3,4 & \text{extended cyclic prefix} \end{cases}$$

Before transmitting a sidelink synchronization signal, a UE may discover a sidelink synchronization source. Furthermore, when the sidelink synchronization source is discovered, the UE may obtain time-frequency synchronization through the received sidelink synchronization signal from the discovered sidelink synchronization source. Furthermore, the corresponding UE may transmit a sidelink synchronization signal.

Furthermore, a channel for delivering system information used for communication between UEs and synchronization-related information along with synchronization may be necessary. The channel may be referred to as a physical sidelink broadcast channel (PSBCH).

## Vehicle-to-everything (V2X)

### (1) vehicle-to-evervthinq (V2X) sidelink communication

V2X sidelink communication includes communication between a vehicle and all entities, such as vehicle-to-vehicle (V2V) referring to communication between vehicles, vehicle to infrastructure (V2I) referring communication between a vehicle and an eNB or a road side unit (RSU), and vehicle-to-pedestrian (V2P) referring to communication between a vehicle and UEs owned by persons (pedestrian, bicycler, vehicle driver or passenger).

In this case, a wireless communication system supporting V2X sidelink communication may include specific network entities for supporting communication between a vehicle and all entities. For example, the network entity may be an eNB, road side unit (RSU), a UE or an application server (e.g., traffic safety server).

Furthermore, a UE performing V2X sidelink communication may mean a vehicle UE (V-UE), a pedestrian UE, an RSU of an eNB type or an RSU of a UE type in addition to a common handheld UE.

V2X sidelink communication may be directly performed between UEs or may be performed through a network entity(s). V2X operation modes may be classified according to a method of performing V2X sidelink communication.

Terms used in V2X are defined as follows.

A road side unit (RSU): a road side unit (RSU) is a V2X service-capable apparatus capable of transmission and reception to and from a moving vehicle using V2I service.

Furthermore, the RSU is a fixed infrastructure entity supporting a V2X application program and may exchange messages with other entities supporting a V2X application program.

Pseudonymity: a condition in which data is not provided to a specific subscriber without using additional information in the processing of personally identifiable information (PII). A technological and organization measures for separately maintaining such additional information and guaranteeing non-attribution for a subscriber that has been identified or that may be identified.

The RSU is a term frequently used in the existing ITS spec. The reason why the term is introduced into 3GPP spec. is for enabling the document to be read more easily in the ITS industry.

The RSU is a logical entity that combines V2X application logic with the function of an eNB (called eNB-type RSU) or a UE (called UE-type RSU).

V2I Service: type of V2X service and an entity having one side belonging to a vehicle and the other side belonging to infrastructure.

V2P Service: V2X service type in which one side is a vehicle and the other side is a device carried by a person (e.g., a portable device carried by a pedestrian, bicycler, driver or follow passenger).

V2X Service: 3GPP communication service type in which a transmission or reception device is related to a vehicle.

V2V service, V2I service and V2P service may be further classified depending on a counterpart who participates in communication.

V2X enabled UE: UE supporting V2X service.

V2V Service: type of V2X service in which both sides of communication are vehicles.

V2V communication range: a direct communication range between two vehicles participating in V2V service.

V2X application program support type

A V2X application called vehicle-to-everything (V2X), as described above, includes the four types of (1) vehicle-to-vehicle (V2V), (2) vehicle-to-infrastructure (V2I), (3) vehicle-to-network (V2N) and (4) vehicle-to-pedestrian (V2P).

FIG. 12 illustrates the type of V2X application to which the present invention may be applied.

The four types of a V2X application may use "co-operative awareness" providing more intelligent service for the final user.

This means that entities, such as a vehicle, roadside infrastructure, an application server and a pedestrian, can collect knowledge of a corresponding area environment (e.g., information received from other adjacent vehicle or sensor device) so that the entities can process and share the corresponding knowledge in order to provide more intelligent information, such as a cooperative collision warning or autonomous driving.

Furthermore, the V2V applications expect adjacent UEs to exchange V2V application information. The 3GPP transmission of a message including V2V application information requires a UE to obtain valid subscription and permission from a network operator.

Transmission for a valid subscriber is provided regardless of whether a UE is served by an E-UTRAN. A UE supporting the V2V application transmits a message including 2V application information (e.g., location, dynamic and attributes). Message payload may be flexible in order to accommodate the amount of various types of information.

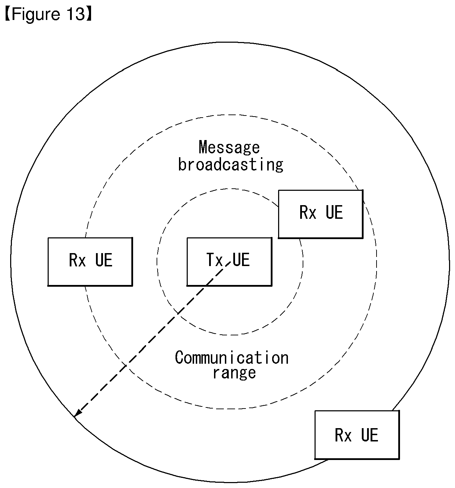

The 3GPP transmission of a message including V2V application information is chiefly based on broadcast as shown in FIG. 13. Such 3GPP transmission includes direct transmission between UEs due to a restricted direct communication range and/or transmission between UEs through a base structure supporting V2X communication, such as RSX and application server.

FIG. 13 illustrates broadcast-based V2V communication to which the present invention may be applied.

### Vehicular to vehicular (V2V)

An E-UTRAN enables adjacent UEs to exchange V2V-related information using the E-UTRAN when a permission, grant and proximity criterion is satisfied. A proximity criterion may be configured to a worker.

Furthermore, a UE supporting the V2V application broadcasts application layer information (e.g., as part of V2V service, regarding a corresponding location, dynamic and attributes). V2V payload needs to be flexible in order to accommodate different information contents. The information may be periodically broadcasted based on a configuration provided by an operator.

### Vehicle-to-infrastructure (V2I) application

A UE supporting the V2I application transmits a message, including V2I application information, to an RSU or a local-related application server. The RSU and/or local-related application server transmits a message, including V2I application information, to one or more UEs supporting the V2I application.

A locally related application program server provides services to a specific geographical area. The same or different application programs may be provided because there are several application program servers providing service to an overlap area.

### Vehicle-to-network (V2N) application

A UE supporting the V2N application communicates with an application server supporting the V2N application. Both communicate with each other through an EPS.

### Vehicle-to-pedestrian (V2P) application

The V2P applications expect adjacent UEs to exchange V2P application information. The 3GPP transmission of a message including V2P application information requires a UE to obtain valid subscription and permission from a network operator. Transmission for a valid subscriber is provided regardless of whether a UE is served by an E-UTRAN.

A UE supporting a V2P application transmits a message including V2P application information. The V2P application information is expected to be transmitted by a UE supporting the V2X application in a vehicle (warning against a pedestrian) or a UE supporting a V2X application related a vulnerable road user (e.g., warning against a vehicle).

The 3GPP transmission of a message including V2P application information includes direct transmission between UEs due to a restricted direct communication range and/or transmission between UEs through an infrastructure structure supporting V2X communication, such as an RSX or application server.

A major difference between the 3GPP transmission of a message including V2P application information and the 3GPP transmission of a message including V2V application information lies in the characteristics of a UE. A UE supporting a V2P application used by a pedestrian may have a lower battery capacity, for example, and may have limited radio sensitivity due to the antenna design. Accordingly, the UE cannot transmit a message having the same periodicity as a UE supporting the V2V application and/or also cannot receive a message.

### Relative priority of V2X communication

Specific business core services (e.g., public safety, MPS) may be relatively given priority over the transmission of V2X application program information according to local/country regulation requirements and an operator policy. The transmission of safety-related V2X application information may have priority over the transmission of V2X application program information not related to safety.

However, in general, an operator may control relative priority of different services.

**Sidelink communication-related identity (ID)**

A sidelink communication and V2X sidelink communication-related ID to which the present invention may be applied is described.

The following IDs are used for sidelink communication.

- Source Layer-2 ID: identify the sender of data in sidelink communication. Source Layer-2 ID is a 24-bit length and is used with a Destination Layer-2 ID and LCID in order to identify an RLC UM entity and PDCP entity on the receiver side.
- Destination Layer-2 ID: identify the target of data in sidelink communication and V2X sidelink communication. In the case of sidelink communication, the destination layer -2 ID is a 24-bit length and is split into two bit streams in the MAC layer.
- One bit string is the LSB part (8 bits) of a target layer 2 ID and delivered to a physical layer as a group target ID. This is used to identify the target of intended data in sidelink control information and to filter a packet in the physical layer.
- The second bit text string is the MSB part (16 bits) of a target layer 2 ID and delivered within a MAC header. This is used to filter a packet in the MAC layer.
- In the case of V2X sidelink communication, a Destination Layer-2 ID is not split and carried within a MAC header.

No Access Stratum signaling is necessary to form a group and to configure the Source Layer-2 ID, Destination Layer-2 ID and Group Destination ID of a UE.

Such an ID is provided by a higher layer and derived from an ID provided by a higher layer. In the case of group cast and broadcast, a ProSe UE ID provided by a higher layer is directly used as a Source layer-2 ID, and a ProSe Layer 2 group ID provided by a higher layer is directly used as a Destination layer-2 ID in the MAC layer.

In the case of one-to-one communication, a ProSe UE ID and V2X sidelink communication provided by a higher layer are directly used as a Source layer-2 ID or Destination layer-2 ID in the MAC layer.

V2X sidelink communication is described more specifically.

The support of V2X service through the PC5 interface is provided by V2X sidelink communication, that is, a communication mode in which a UE can perform direct communication through the PC5 interface. The communication mode is supported when a UE is served by an E-UTRAN and when a UE is out-of-E-UTRA coverage.

Only a UE permitted to be used in V2X service may perform V2X sidelink communication. Furthermore, in the case of V2X sidelink communication:

- A sidelink transport channel (STCH) for sidelink communication is also used for V2X sidelink communication.
- V2X data transmitted in a resource configured for V2X sidelink communication is not multi-transmitted along with non-V2X (e.g., public safety) data.

For sidelink communication, a control plane protocol stack for an SBCCH is also used for V2X sidelink communication as shown in FIG. 5b.

A UE supporting V2X sidelink communication may operate in the two modes for resource allocation:

- Reserved resource allocation.
- A UE needs to be in RRC_CONNECTED in order to transmit data.
- A UE requests a transmission resource from an eNB. The eNB schedules a transmission resource for the transmission of sidelink control information and data.
- UE autonomous resource selection.
- A UE autonomously selects a resource in a resource pool and performs transmission format selection for transmitting sidelink control information and data.
- When mapping between a zone and a V2X sidelink transmission resource pool is configured, a UE selects a V2X sidelink resource pool based on the zone where the UE is located.
- A UE performs sensing for the (re)selection of sidelink resources. Based on the results of the sensing, the UE (re)selects some specific sidelink resources and reserves a plurality of sidelink resources.

A maximum of two parallel independent resource reservation processes are permitted to be performed by a UE. The UE is also permitted to perform single resource selection for V2X sidelink transmission.

A geographical area may be configured by an eNB or may be pre-configured. When the area is configured, the world is divided into geographical areas using a single fixing reference point (i.e., geographical coordinates (0, 0)), length and width).

A UE determines a zone identity based on the length and width of each zone, the number of zones in the length, and the number of zones in the width, and modulo operation using single fixing reference point.

The length and width of each zone, the number of zones in the length, and the number of zones in the width are provided by an eNB when a UE is in coverage and is pre-configured when the UE is out of coverage.

This area may be configured both in a service area and service area.

When a UE uses UE-autonomous resource selection with respect to the UE in coverage, an eNB may provide mapping between the V2X sidelink transmission resource pools between a zone(s) and an SIB21.

With respect to UEs out of coverage, mapping between a zone(s) and V2X sidelink transmission resource pools may be pre-configured.

If mapping between a zone(s) and a V2X sidelink transmission resource pool is (pre)configured, a UE selects a transmission sidelink resource in a resource pool corresponding to a zone where the UE is located.

The zone concept is not applied to a reception pool in addition to an exceptional V2X sidelink transmission pool.

A resource pool for V2X sidelink communication is not configured based on priority.

For V2X sidelink transmission, during handover, a transmission resource pool configuration including an exceptional transmission resource pool for a target cell may be signaled in a handover command in order to reduce a transmission stop.

Accordingly, a UE may use the transmission sidelink resource pools of the target cell before handover is completed as long as synchronization with the target cell is performed.

If an exceptional transmission resource pool is included in a handover command, the UE randomly starts to use a selected resource in the exceptional transmission resource pool starting from the reception of the handover command. When resource allocation scheduled in the handover command is configured in the UE, the UE continues to use the exceptional transmission resource pool while a timer related to handover is executed. When autonomous resource selection is configured in the UE in a target cell, the UE continues to use the exceptional transmission resource pool until initial sensing is completed in a transmission resource pool for autonomous resource selection.

In an exceptional case (e.g., in a radio link failure (RLF), during transition from RRC IDLE to RRC CONNECTED or during a change in the dedicated sidelink resource pool of a cell), a UE may select resources in an exceptional pool provided by the SIB 21 of a serving cell based on sensing and may temporarily use them.

In obtaining a reception pool broadcasted by a target cell, in order to avoid a stop time when a V2X message is received due to latency, a synchronization configuration and reception resource pool configuration for the target cell may be signaled in a handover command with respect to RRC_CONNECTED UEs.

In the case of an RRC_IDLE UE, to minimize a sidelink transmission/reception stop time related to the acquisition of the SIB21 of a target cell depends on a UE implementation.

When a UE detects a cell on a corresponding carrier based on a criterion, the carrier is considered to be in-coverage in a carrier used for V2X sidelink communication.

If a UE permitted for V2X sidelink communication is in coverage for V2X sidelink communication, it may use resource allocation scheduled based on an eNB configuration or UE autonomous resource selection.

When a UE is out of coverage for V2X sidelink communication, a transmission and reception resource pool set for data is pre-configured in the UE. A V2X sidelink communication resource is not shared with another non-V2X application program transmitted through a sidelink.

If an RRC_CONNECTED UE is interested in V2X communication transmission in order to request a sidelink resource, it may transmit a sidelink UE information message to a serving cell.

In order to receive V2X communication, when a UE is configured by a higher layer and provided with a PC5 resource, the UE receives a configured resource.

A serving cell may provide a synchronization configuration for a carrier used for V2X sidelink communication. In this case, a UE follows a synchronization configuration received from a serving cell.

If a cell is not detected on the carrier used for V2X sidelink communication and the UE does not receive the synchronization configuration from the serving cell, the UE follows a pre-configured synchronization configuration. A synchronization criterion includes three types of an eNB, a UE and a GNSS. If the GNSS is configured as a synchronization source, the UE uses UTC time in order to calculate a direct frame number and subframe number.

If eNB timing is set as a synchronization criterion for a UE for a dedicated carrier for V2X, the UE follows a PCell (RRC_CONNECTED)/serving cell (RRC_IDLE) for synchronization and DL measurement.

**PC5 interface-based V2X operation mode**

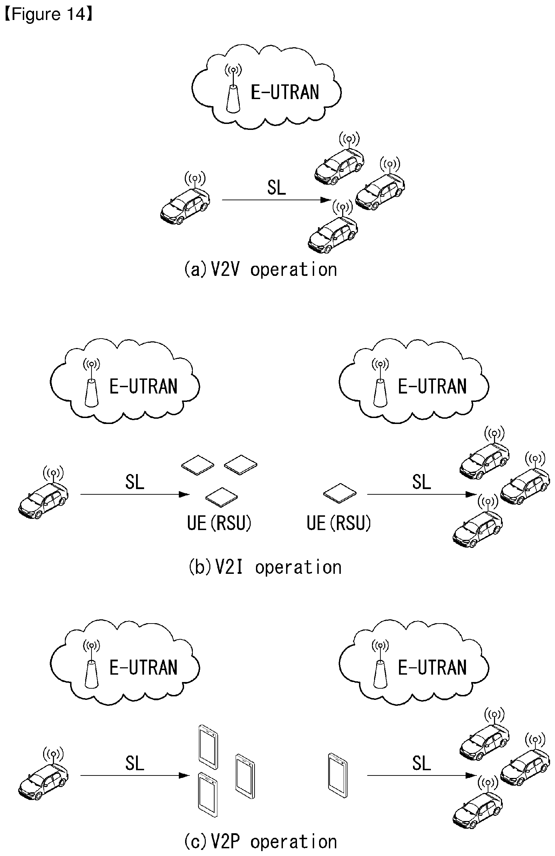

FIG. 14 illustrates examples of a V2X operation mode based on a PC5 interface only.

Referring to FIG. 14, a UE transmits a V2X message to a plurality of UEs in the area where a sidelink is supported. In this case, the V2X message means a message mutually transmitted by a network entity or UE using a V2X sidelink communication system.

FIG. 14(a) means a V2V operation mode, FIG. 14(b) means a V2I operation mode, and FIG. 14(c) means a V2P operation mode. In this case, in the case of V2I, one of a transmitter UE or a receiver UE is an RSU of a UE type. Furthermore, in the case of V2P, one of a transmitter UE or a receiver UE is a pedestrian UE.

**Uu interface-based V2X operation mode**

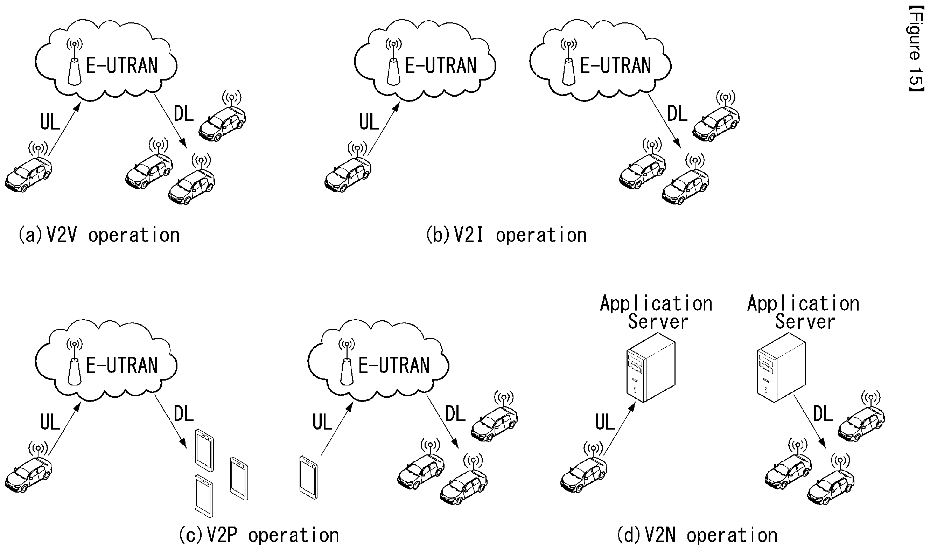

FIG. 15 illustrates examples of a V2X operation mode based on a Uu interface only.

Referring to FIG. 15, FIG. 15(a) means a V2V operation mode, FIG. 15(b) means a V2I operation mode, FIG. 15(c) means a V2P operation mode, and FIG. 15(d) means a V2N operation mode.

In this case, there is a mode in which a UE(s) transmits (uplink transmission) a message (e.g., V2X message, V2I message) to a specific network entity (e.g., eNB, E-UTRAN) and a specific network entity transmits (downlink transmission) a message (e.g., V2X message, I2V message) to a plurality of UEs located in a specific area.

In this case, the specific network entity may be an eNB, an E-UTRAN or an RSU of an eNB type.

Furthermore, the UE may communicate with an application server.

Furthermore, in order to support a Uu interface-based V2X operation mode, an E-UTRAN performs the uplink reception and downlink transmission of V2X messages. For the downlink, the E-UTRAN may use a broadcast mechanism.

**Uu interface and PC5 interface-based V2X operation mode**

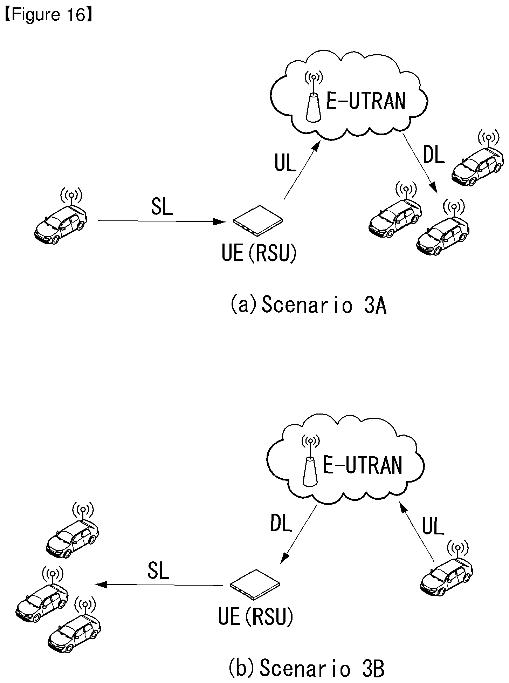

FIG. 16 illustrates examples of a V2X operation mode based on both the Uu interface and the PC5 interface.

Referring to FIG. 16, FIG. 16(a) means a scenario 3A mode in which an E-UTRAN receives a V2X message from a UE type RSU and transmits the received V2X message to a plurality of UEs. In contrast, FIG. 16(b) means a scenario 3B mode in which a UE transmits a V2X message to an E-UTRAN, the E-UTRAN transmits the received V2X message to one or more UE type RSUs, and a UE type RSU transmits a V2X message to other UEs through a sidelink.

More specifically, if both the Uu interface and the PC5 interface are used, an RSU (e.g., an RSU of a UE type) is present between UEs and a specific network entity. The RSU may receive a message from the UEs or transmits a message to the UEs.

In this case, it is assumed that the RSU is connected to a specific network entity.

The specific network entity may receive a message from the UEs using the RSU or may transmit a message to the UEs. In this case, the specific network entity may be an eNB, an E-UTRAN or an RSU of an eNB type.

In this case, a specific network entity or RSU that receives the message of the UEs may operate through the Uu interface (e.g., Uu vehicle-to-infrastructure (V2I)) using a legacy LTE uplink method.

Alternatively, the specific network entity or the RSU may operate through the PC5 interface (e.g., PC5 V2I or PC5 V2V signal overhearing) using a separate resource or separate band supporting communication between UEs.

Likewise, the specific network entity or RSU transmitting a message to the UEs may operate through the Uu interface or the PC5 interface using a legacy LTE downlink method.

(2) Scheduling scheme in V2V sidelink communication

In the case of V2V sidelink communication, an eNB indication-based scheduling method (i.e., Mode 1) of sidelink communication and a scheduling method (i.e., Mode 2) for a UE to autonomously select a resource within a specific resource pool may be used.

However, in V2V sidelink communication, Mode 3 corresponding to Mode 1 and Mode 4 corresponding to Mode 2 are defined so that they are different from those in the case of the existing sidelink communication.

In this case, Mode 3 may be referred to as a distributed scheduling method, and Mode 4 may be referred to as an eNB scheduling method.

In particular, sensing based on a semi-persistent transmission-based mechanism may be defined with respect to the distributed scheduling method (i.e., Mode 4). Most of V2V traffic from a UE is periodical. The V2V traffic is used to sense congestion for a resource and to estimate a future congestion for a corresponding resource. Corresponding resources are booked based on the estimation. The use of a channel can be optimized by improving separation efficiency between transmitters using an overlap resource through such a technology.

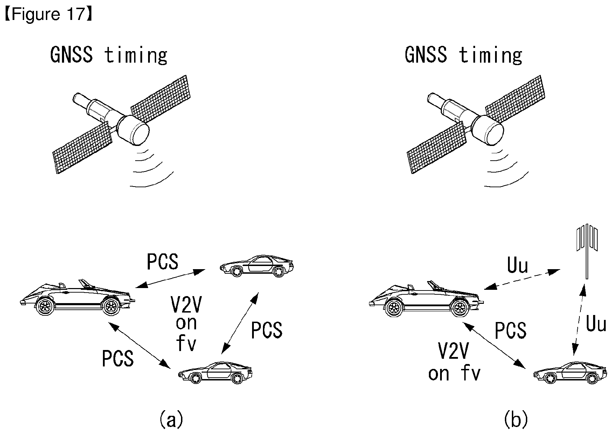

A configuration 1 for Mode 4 (i.e., distributed scheduling) and a configuration 2 for Mode 3 (i.e., eNB scheduling) may be represented like FIG. 17.

FIG. 17 illustrates examples of scheduling methods which may be applied to V2V sidelink communication.

Referring to FIG. 17, two configurations use a V2V communication dedicated carrier. That is, a band for the dedicated carrier is used for only PC5-based V2V communication. In this case, FIG. 17(a) illustrates a method for the configuration 1, and FIG. 17(b) illustrates a method for the configuration 2.

In this case, in both cases, time synchronization may be performed by a global navigation satellite system (GNSS).

FIG. 17(a), that is, in the case of the configuration 1, the scheduling and interference management of V2V traffic is supported based on a distributed algorithm (i.e., Mode 4) implemented between vehicles. As described above, the distributed algorithm is based on sensing through semi-persistent transmission. Furthermore, a mechanism in which resource allocation depends on geographical information is defined.

In contrast, FIG. 17(b), that is, in the case of the configuration 2, the scheduling and interference management of V2V traffic is supported by an eNB through control signaling through the Uu interface. The eNB allocates resources used for V2V signaling in a dynamic manner.

As described above, in order to perform direct communication between UEs through Sidelink and the like, an eNB may select and indicate a resource to transmit a message, and signal the related control message and the like for the UE. As such, the scheme that an eNB indicates and signals may be referred to as network-assisted scheme and/or mode 1 scheme. Different from this, the scheme that a UE directly selects a resource may be referred to as UE-autonomous scheme and/or mode 2 scheme. In addition, in the case of the V2X Sidelink communication, the mode 1 scheme may be referred to as mode 3 scheme and the mode 2 scheme may be referred to as mode 4 scheme.

When a communication is performed between UEs, the UE needs to transmit Scheduling Assignment (SA) that designates resource allocation information and the like for transmission data in Sidelink resource selection and scheduling to another UE. In addition, in the case of the mode 1 scheme, an eNB transmits Downlink Control Information (DCI) that designates information for SA and information for transmission data to a UE. Here, the DCI may include a part of information for SA transmission and contents of SA (i.e., information related to data transmission). Furthermore, the DCI may be referred to as Sidelink grant, and the SA may be referred to as Sidelink Control Information (SCI).

At this time, pattern for transmitting SA and/or data (e.g., time/frequency resource pattern) and/or information for scheduling scheme and the like may be added as a specific field of the DCI. In this case, a part of the DCI format designed with the same size as the existing DCI format (i.e., DCI format 0) may be changed. For example, when SA and/or data is retransmitted, in the case that an eNB transmits only DCI for an initial transmission, not transmitting DCI in each retransmission (or transmission), the eNB needs to inform the information for remaining SA and/or data. Here, the transmission of only the DCI for the initial transmission may be designed for reducing DCI overhead.

As described above, while an addition of specific field(s) for DCI is considered, in the case that the fields for the parameters previously existed are maintained without any change, a length (i.e., size) of DCI is increased. In this case, as a size changes for each DCI format, a problem may occur that count and/or type of blind decoding performed in a UE is changed. That is, in the case that a size of DCI format is not regularly configured for each format, overhead of blind decoding of UE may be increased.

Accordingly, a method of maintaining a size of DCI format (i.e., the size is configured as the same as DCI format 0) needs to be considered even in the case that new fields are added in DCI. In this case, a method of adding new fields may be considered while a part of existing fields in the existing DCI is deleted or constricted.

At this time, the value indicated in the corresponding field (i.e., deleted or constricted field) may be indicated to a UE by using other signaling or other field which may be replaced. Here, the other field which may be replaced may mean a newly added field as well as the existing fields in the existing DCI.

Hereinafter, in the present disclosure, a method for configuring a DCI format used for V2X Sidelink communication will be described in detail.

As described above, the DCI is information used for scheduling SA (or SCI or PSCCH), and the SA is information used for scheduling (Sidelink) data (or PSSCH).

In addition, in the case of the Sidelink communication, the DCI format that an eNB transmits to a transmission UE may be represented as DCI format 5, and the SA that a transmission UE transmits to a reception UE may be represented as SCI format.

Particularly, in the case of the V2X Sidelink communication, the DCI format that an eNB transmits to a transmission UE may be represented as DCI format 5A, and the SA that a transmission UE transmits to a reception UE may be represented as SCI format 1. However, this is just an example, but not limited to the representation, and may be represented in various forms. For example, the DCI format used for the V2X Sidelink communication may be represented as DCI format 5, DCI format 5A, modified DCI format 5 or new DCI format 5, and the like.

In addition, hereinafter, the description described in relation to the present invention may also be extendedly applied to other wireless communication operates in the same way as well as the V2X Sidelink communication.

In this case, as described above, even in the case that additional information (i.e., additional field), which was not existed in the DCI format, is included, the methods for maintaining a length (i.e., size) of the DCI format as the same as the existing case are described in the present disclosure.

Furthermore, the methods described in the present disclosure may be applied as a method for reducing a size of the general DCI format as well as a method for maintaining a size of the DCI format which is used for the V2X Sidelink communication. The reducing of a size of the DCI format itself may mean that an amount of resource (e.g., radio resource, power, transmission time, etc.) consumed for transmitting the DCI is reduced. Accordingly, when a size of the DCI format is reduced, an eNB may perform scheduling more efficiently in an aspect of resource.

In addition, the embodiments described below are distinguished for the convenience of description, but a part of the configuration of any one embodiment may be included in the other embodiment, or may be replaced by the configuration or the characteristics corresponding to the other embodiment.

Method for reducing a size of a field related to SA and/or resource of data

In order to maintain a size of DCI while a new field is added to the DCI, a method for reducing a size of the SA resource field (i.e., resource field for Physical Sidelink Control Channel (PSCCH)) included in the existing DCI may be considered.

In comparison with the existing case (e.g., Sidelink communication between normal UEs), the number of resources usable for V2X communication or SA transmission in V2V communication may not be changed or only a few of it may be changed. In this case, there is little possibility that a size (e.g., 6 bits) of the field indicating the SA resource defined in the existing DCI format (e.g., DCI format 5/5A) with the change of the scheme of multiplexing SA and/or data (e.g., Frequency Division Multiplexing (FDM) scheme and Time Division Multiplexing (TDM) scheme) only.

However, in the case that a UE may know a part or the whole of allocation information for time/frequency resource of SA transmission, may be indicated with the information from an eNB and the like, or may estimate it autonomously, the size of the field indicating the SA resource may be reduced. That is, a method of reducing the field indicating the SA field using predefined information (i.e., advance information) or implicit information (configuring the size of the field indicating the SA resource to smaller than 6 bits).

For example, in the case that it is configured that SA is transmitted after a specific time offset (or timing gap, subframe offset) based on a transmission position of DCI, the information for the time resource of SA transmission is not required to be included in the DCI. As an example, in the case that the DCI is transmitted in subframe #n, it may be configured that SA is transmitted in subframe #n+k.

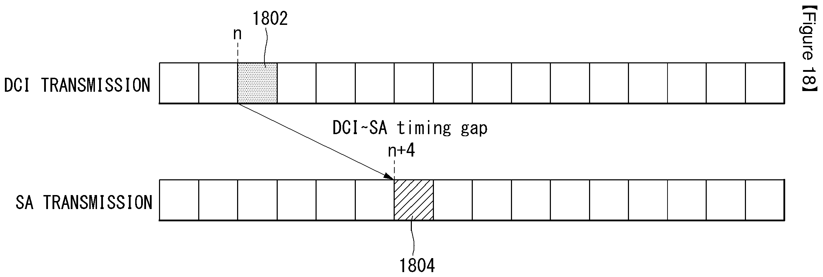

Here, the configuration information for the specific timing offset may be predefined (predetermined or preconfigured) on a system or an eNB may inform the configuration information through signaling (e.g., higher layer signaling) to a UE. As an example, this method may be performed as shown in FIG. 18.

FIG. 18 illustrates an example of SA transmission scheme. FIG. 18 is shown just for the convenience of description, but does not limit the scope of the present invention.

Referring to FIG. 18, each of the squares depicted means a subframe, and the case is assumed that SA is transmitted in 4th subframe after DCI transmission. Particularly, in the case that the DCI is transmitted in subframe #n 1802, it may be configured that SA is transmitted in subframe #n+4 1804. Alternatively, different from FIG. 18, it may be configured that SA is transmitted in the first Sidelink subframe existed (or generated) after subframe #n+4 1804.

As described above, in the case that the SA transmission is configured to be transmitted after a specific timing offset (or timing gap) based on a transmission position of the DCI, the eNB may indicate only frequency resource allocation information of the SA transmission to the UE using the DCI. In addition, in the case that the SA transmission is configured to be performed at a position departed from as much as a specific timing offset and/or a specific frequency offset based on a transmission position of the DCI, the eNB may transmit the DCI in which time resource allocation information and/or frequency resource allocation information are/is excluded to the UE. In other words, since a part of resource allocation information may be excluded from the DCI based on time/frequency relationship between the DCI transmission and the SA transmission, a size of the field indicating the SA resource may be reduced in comparison with the existing DCI.

Alternatively, in the case that SA and data are multiplexed in the FDM scheme and/or SA is transmitted in a sub-channel unit including a regular number of resource blocks (RBs), a size of the frequency resource allocation information of the SA transmission may be reduced.

In addition, the method described above may reduce the size of the field indicating the SA resource, and may also be efficiently applied to the case that V2X communication or V2V communication uses wide band on frequency (i.e., supports wide bandwidth). Particularly, uncertainty of SA detection may be reduced as specific time/frequency offset is used between the DCI transmission and the SA transmission, and accordingly, an efficient SA scheduling may be performed in the FDM scheme.

Further, in relation to the resource information included in the DCI, a method of reducing a size of RB assignment filed as well as the SA resource field may be considered. The RB assignment filed included in the existing DCI field is configured to distinguish the cases of all combinations between the timing when the RB assignment is started and the timing (or the number of assigned RBs) when the RB assignment is ended.

At this time, in the case that a UE may estimate (or infer) the number of RBs assigned by signaling, indication or other field included in the DCI from an eNB and the like, the size of the RB assignment field may be reduced. Alternatively, even in the case that a UE may know a starting point of the RB assignment through interrelationship between frequency assignment schemes of SA and data, the size of the RB assignment field may be reduced. In this case, the number of RBs (i.e., RB size) may be predefined depending on types of V2V or V2X message which is used for the data transmission. In addition, in the case that a resource allocation unit for data is transmitted in a sub-channel unit including a regular number of RBs, the size (i.e., bit number) of the RB assignment field may be changed as the resource allocation unit is changed.

Method for indicating Modulation and Coding Scheme (MCS) index

For the mode 1 scheme described above, Semi-Persistent Scheduling (SPS) as well as dynamic scheduling may be considered for data transmission between UEs. In this case, a common (or single) DCI (or DCI format) may be configured, which may be applied to both of the two (or more) types of scheduling scheme. Separate DCIs may be configured for each scheduling scheme, but in order to reduce complexity of DCI (i.e., in order to reduce blind decoding count and/or types of UE), the common DCI may be used for the scheduling schemes. The common DCI may also be referred to as mode 1 Sidelink DCI or mode 1 Sidelink grant.

At this time, in the case of the dynamic scheduling scheme, information of specific DCI is used once or for transmissions of associated data (or only for a specific transmission period). Different from this, in the case of the SPS scheme, information of specific DCI may be used until the corresponding SPS transmission operation is released. Accordingly, in order to common DCI for two types of scheduling scheme, a field indicating a valid period of the corresponding DCI may be additionally included. Here, the field indicating a valid period of the corresponding DCI may mean a field that distinguishes how long period the corresponding DCI is valid. For example, the field indicating a valid period of the corresponding DCI may include a field that distinguishes dynamic scheduling from SPS.

In the case that dynamic transmission and SPS transmission are distinguished using the field, a specific field may be configured in accordance of each of the uses for the dynamic transmission and the SPS transmission. In this case, a UE may interpret (or use) the corresponding specific field according to each of the uses for the dynamic transmission and the SPS transmission. Alternatively, a part or the whole of the remaining fields except the field that distinguishes the dynamic scheduling and the SPS may be differently configured (or defined) for the dynamic transmission and the SPS transmission.

For example, in the case that the field that distinguishes the dynamic scheduling and the SPS is configured as 1 bit, 0 may indicate that the corresponding DCI is for the dynamic scheduling. That is, 0 may indicate the DCI defined only for one-shot transmission or the associated transmission (or retransmission). Different from this, 1 may indicate that the corresponding DCI is for the SPS. Accordingly, when a UE receives the DCI configured as 1, the corresponding UE may operate based on the SPS transmission. That is, the UE may transmit SA and/or data indicated by the corresponding DCI during the previously configured and/or a predetermined period indicated by signaling (e.g., RRC signaling), and the like or until the corresponding SPS transmission operation is released.

In relation to the predetermined period, the UE may count the number of SA and/or data being transmitted and perform a transmission of SA and/or data until a corresponding timer expires. Alternatively, the UE may count time lapsed from the timing when the DCI is transmitted and perform a transmission of SA and/or data until a corresponding timer expires.

As described above, in the case that the SPS transmission as well as the dynamic transmission is scheduled using a common DCI (i.e., the same DCI format), various types of messages may be transmitted in the aspect of a size of message block, a size of transport block, and the like. Accordingly, an eNB is required to designate the Modulation and Coding Scheme (MCS) applied to the various types of messages.

In this case, the eNB may indicate an MCS index in semi-static manner for a UE through higher layer signaling (e.g., RRC signaling) and the like.

Alternatively, the MCS index is included in the existing SA (i.e., SCI format), but a method of including a field indicating information for the MCS in the DCI may be considered so as to a UE may detect MCS level even in the case that the UE fails to receive the SA. Particularly, in the case that the DCI includes a field indicating information for the MCS, even in the case that the UE performing SPS transmission fails to receive the SA, the UE may detect a change of the MCS using the DCI.

For example, like DCI format 0, a field indicating the MCS (i.e., MCS index) or MCS and redundancy version may be included in the DCI which is used for Sidelink (or V2X, V2V) communication. At this time, the corresponding field may be configured with 5 bits considering the usable MCS level.

For another example, by using the characteristics that transmittable types of message is limited for Sidelink (or V2X, V2V) communication, a method of reducing a size of the field indicating the MCS index may be used (i.e., configuring a size of the field indicating the MCS index to be smaller than 5 bits). In the case of using the field of which size is reduced, an eNB may indicate the MCS index for a transmission of the message related to the corresponding DCI to a UE by using the remaining bits which are occurred owing to the reduction of size of other fields included in the DCI. That is, in the case of using the method, there is an advantage that a size of the existing DCI may be maintained even in the case that the remaining bit is configured smaller.

Particularly, the eNB may transmit the DCI including an additional field indicating the MCS index and the like to the UE. In other words, the DCI may include a separate field indicating a specific message among the messages which are categorized according to the MCS index, a size of message, and the like. Here, the specific message may mean a set of specific messages which are selected among preconfigured multiple message sets.

In the case of the dynamic scheduling transmission, various types of messages may be transmitted in comparison with the SPS transmission. However, such V2V and/or V2X message transmission is performed in broadcast manner mainly, not a transmission to a specific UE. Therefore, the types of messages transmitted in the V2V and/or V2X communication (or Sidelink communication) may be limited. Accordingly, a method may be used that an eNB indicates only a part of MCSs corresponding to the limited types of messages. In addition, based on the characteristics of performing repeated transmission of the SPS transmission, when the MCS satisfying a predetermined level, a message transmission may be smoothly performed. Accordingly, in the case of the SPS transmission, even in the case that a specific MCS is indicated among a part of MCSs proper for the SPS transmission, not the whole MCSs, a message transmission may be performed without any problem.

As described above, in the case of the V2V and/or V2X communication (or Sidelink communication), only a part of the MCS indexes may be selectively used among the usable MCS indexes for a message transmission, and only a part of the whole transport block sizes may be selectively used. Furthermore, when sizes of the MCS index and the transport block used for the message transmission are determined, a size of resource block (RB) to be used for the message transmission may also be determined. Alternatively, the MCS index may be determined after the size of resource block and the size of transport block are determined, and any combinations of the order of determining thereof are available.

As such, the MCS (i.e., MCS index) required for a type of transmitted message, a size of transport block (TB size), a size of resource block (RB size), and the like may be predefined, and made up as a set. That is, according to the MCS required for a type of message used in the V2V and/or V2X communication, a size of transport block, a size of resource block, and the like, one or more message sets may be predefined (or preconfigured or predetermined). In this case, even in the case that a UE detects a set of messages indicated by the corresponding DCI, the UE may obtain the information for the MCS level required for a transmission of the corresponding message, a size of transport block and a size of resource block.

In addition, in the case that a coding rate (i.e., coderate) of the corresponding message is not sufficient or the corresponding message has an importance to be transmitted repeatedly, the corresponding message is configured to be transmitted repeatedly. In this case, the information for the (maximum) retransmission count, the coding rate, and the like may be additionally included in addition to the MCS (i.e., MCS index), a size of transport block, a size of resource block, and the like.

As an example, the message sets may be configured as represented in Table 3 below.

[Table 3]

| Message Set | Message size | N_rpt | N_PRB | I_TBS | I_MCS | Q_m | Coderate |
|---|---|---|---|---|---|---|---|
| 1 | 190Byte | 3 | 10 | 9 (1544bit) | 9 | 2 | 0.268 |
| 2 | 300Byte | 2 | 10 | 13 (2536bit) | 14 | 4 | 0.330 |
| 3 | 800Byte | 2 | 25 | 13 (6456bit) | 14 | 4 | 0.336 |
| 4 | 1600Byte | 2 | 50 | 13 (12960bit) | 14 | 4 | 0.338 |
| ... | ... | ... | | ... | ... | ... | ... |

In Table 3, 'Message size' means a size of the corresponding message, 'N_rpt' means a number of repetition transmissions of the corresponding message, 'N_PRB' means the number of resource block (i.e., a size of resource block) used for transmitting the corresponding message, 'I_TBS' means an index (size) of the transport block used for transmitting the corresponding message, 'I_MCS' means an MCS index used for transmitting the corresponding message, 'Q_m" means a modulation order used for transmitting the corresponding message, and 'coderate' means a code rate of the corresponding message.

At this time, as represented in Table 3, in the case that 4 types of message sets (i.e., a first message set (Message set 1), a second message set (Message set 2), a third message set (Message set 3) and a fourth message set (Message 4)) are configured, a message set field configured with a combination of a size of message, a number of repetition transmissions, the number of resource block, and the like may be configured with 2 bits. Here, the message set field may mean a separate field indicating the MCS index, and the like included in the DCI. At this time, in the case that the message set field is configured with 2 bits, the first message set is indicated by '00', the second message set is indicated by '01', the third message set is indicated by '10' and the fourth message set is indicated by '11'. That is, the MCS index used for transmitting the corresponding message may be indicated by using 2 bits only which is decreased by 3 bits in comparison with the existing 5 bits.

In this case, the configuration information for the message set described above may be predefined on a system, or the configuration information for the message set may be transmitted to a UE through higher layer signaling, and the like. In addition, the configuration information for the message set may be configured with a combination of various parameters related to the corresponding message types as well as a size of message, a number of repetition transmissions, the number of resource block, and the like.

Further, in the various embodiments, the retransmission count (e.g., N_rpt) used for V2V and/or V2X communication may be indicated by Time-Resource Pattern of Transmission (T-RPT) field and so on included in a new field indicating the message set or the existing DCI (e.g., DCI format 5). In addition, in the case that the new field and the T-RPT field are not used, the retransmission count may be indicated through higher layer signaling (e.g., RRC signaling), or a separate field indicating the retransmission count may be included in the DCI.

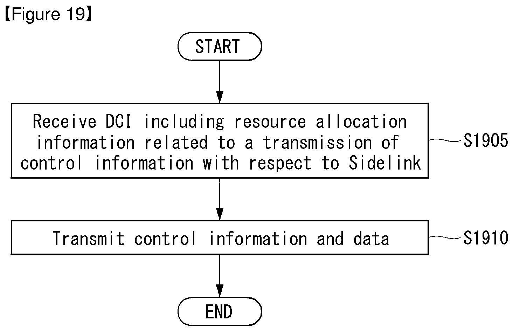

FIG. 19 illustrates an operation flowchart for a first UE to transmit and receive data in a wireless communication system supporting Vehicle-to-Everything (V2X). FIG. 19 is shown just for the convenience of description, but not intended to limit the scope of the present invention.

Referring to FIG. 19, the case is assumed that a first UE receive a resource selection and an indication for scheduling through downlink control information from an eNB in order to perform Sidelink communication (i.e., Device-to-Device communication) with a second UE.

In step S1905, the first UE receives downlink control information (DCI) including resource allocation information related to a transmission of control information (e.g., SA) with respect to Sidelink from the eNB. At this time, the corresponding resource allocation information may mean the SA resource allocation information of which size is adjusted (i.e., the bit number is configured smaller than the SA resource allocation information included in the existing DCI) described above.

After the first UE receives the DCI, in step S1910, the first UE may transmit Sidelink control information and at least one data (i.e., data transmitted through Sidelink, Sidelink data) to the second UE. In this case, the transmission of the at least one data may be performed after the transmission of control information with respect to Sidelink or performed simultaneously.

At this time, the transmission of control information with respect to Sidelink is performed in a second subframe located after a preconfigured offset from a first subframe in which the DCI is received. Here, the preconfigured offset may mean a specific timing offset described in the first embodiment described above. That is, the preconfigured offset may be configured based on the relationship between a reception position of the DCI (or DCI transmission position in the aspect of an eNB) and a transmission position of the control information with respect to Sidelink. In addition, the second subframe may include a first Sidelink subframe located after a preconfigured offset from the first subframe. That is, the first subframe is subframe #n, the second subframe may include subframe #n+4 (e.g., n+4th subframe) or a first (or initial) subframe generated after the subframe #n+4.

In this case, the resource allocation information included in the DCI may include resource allocation information of which size is adjusted based on at least one of the preconfigured offset or a transmission unit (e.g., sub-channel unit including a preconfigured (i.e., predetermined) number of RBs) on the frequency domain related to the transmission of control information with respect to the Sidelink. For example, the resource allocation information included in the DCI may mean resource allocation information of which size is adjusted (e.g., configured with a bit number smaller than 6 bits) as the time resource allocation information is excluded according to the preconfigured offset. At this time, the bit number configuring the DCI format related to the DCI may be configured as the same bit number configuring other DCI format (e.g., DCI format 0). That is, a length of the DCI format may be identically configured with the length of DCI format 0.

In addition, the DCI may further include specific information (i.e., specific field) indicating an MCS index for the at least one data transmission. For example, a separate field indicating the MCS described in the second embodiment above in the DCI may be additionally included.

In this case, the specific information may include information indicating a specific message set among preconfigured message sets. Here, the preconfigured message sets may mean the message sets described in the second embodiment above. In other words, the preconfigured message sets may be configured based on at least one of an MCS index required related to a transmission of at least one data, the number of transport blocks, or the number of resource blocks. At this time, the specific information may be configured with a bit number smaller than 5 bits, and the bit number configuring the DCI format related to the DCI may be identically configured with the bit number configuring other DCI format (e.g., DCI format 0).

Further, the DCI may further include control information with respect to the Sidelink and information indicating whether the transmission of at least one data is performed according to the SPS scheme (e.g., a field indicating a valid period of the corresponding DCI in the second embodiment).

According to the methods described above, the size of the DCI (e.g., mode 1 sidelink grant) used in V2V and/or V2X communication may be identically configured with the size of the existing other DCI (e.g., DCI format 0). Accordingly, even in the case that additional information required for V2V and/or V2X communication is included in the DCI, a UE may perform the blind decoding for the DCI, which was performed for the existing DCI, in the same manner. That is, even in the case that additional information required for V2V and/or V2X communication is included in the DCI, a UE is not required to perform additional blind decoding in comparison with the previous case, and there is an advantage that DCI overhead does not occur.

Hereinafter, a method for determining transmission timing for SA transmission and data transmission in V2X Sidelink communication proposed in the present disclosure is described in detail with reference to the related drawing.

As described above, (1) DCI is information used for scheduling SA (or SCI or PSCCH) and (2) SA is information used for scheduling (Sidelink) data (or PSSCH), defined in Sidelink communication.

In addition, in the case of Sidelink communication, the DCI format transmitted to a transmission UE from an eNB may be represented as DCI format 5, and the SA transmitted to a reception UE from a transmission UE may be represented as Sidelink Control Information (SCI) format.

Particularly, in the case of V2X Sidelink communication, the DCI format transmitted to a transmission UE from an eNB may be represented as DCI format 5A, and the SA transmitted to a reception UE from a transmission UE may be represented as Sidelink Control Information (SCI) format 1.

However, this is just an example, and not limited to the representation, but may be represented as various forms.

Hereinafter, the description described in relation to the present invention may also be extendedly applied to other wireless communication operates in the same way as well as the V2X Sidelink communication.

First, the method proposed in the present disclosure in V2X Sidelink communication may be classified into a first embodiment and a second embodiment largely according to a use (or transmission) of T-RPT field, and the first embodiment and the second embodiment may be applied together as occasion demands.

The DCI format used for V2X Sidelink communication includes a part of contents of the SA.

Here, the DCI format may be represented as DCI format 5 or DCI format 5A, or modified DCI format 5 or new DCI format 5, and the like.

A part of the contents of the SA included in the DCI format may include a field indicating T-RPT index that represents a pattern for a repeated transmission or a retransmission of data.

Here, the term, 'pattern' may be interpreted as the same meaning as a regular form or a specific form, and the like.

Particularly, in the DCI used in Mode 1 Sidelink communication, it may be classified into the first embodiment and the second embodiment as below according to use of the T-RPT field.

Mode 1 Sidelink, as described above, is a network-assisting scheme that an eNB directly indicates or signals the Sidelink communication related information to a UE, and may also be represented as Mode 3 in V2X Sidelink communication.

### (Embodiment 1: (Re)use T-RPT field)

First, a first embodiment is in relation to a method for (re)using T-RPT field included in the DCI of the existing Sidelink communication for V2X Sidelink communication.

That is, in the case that the T-RPT field is used in V2X Sidelink communication without any change, all of information for a repeated transmission of data may be indicated in single DCI (up to 4 retransmissions).

In other words, for a repeated transmission of V2X Sidelink communication of a transmission UE, an eNB transmits V2X sidelink DCI including T-RPT field to the transmission UE.

By using the T-RPT field, a transmission UE is able to (repeatedly) transmit a message or data to a reception UE on various timings, and flexibility of resource allocation may become significantly increased.

Particularly, in the case that the T-RPT field is used in the DCI of V2X Sidelink communication, a part of resource collision, half-duplex problem, and the like, which may occur by using different T-RPTs between UEs, may be solved.

Here, as a method of interpreting the T-RPT pattern and applying it to an actual data transmission, largely, (1) a method of applying the T-RPT pattern based on SA transmission timing (method 1) and (2) a method of applying the T-RPT pattern based on a predetermined offset from DCI transmission timing (method 2) may be considered.

### (Method 1: Application of T-RPT pattern based on SA transmission timing)

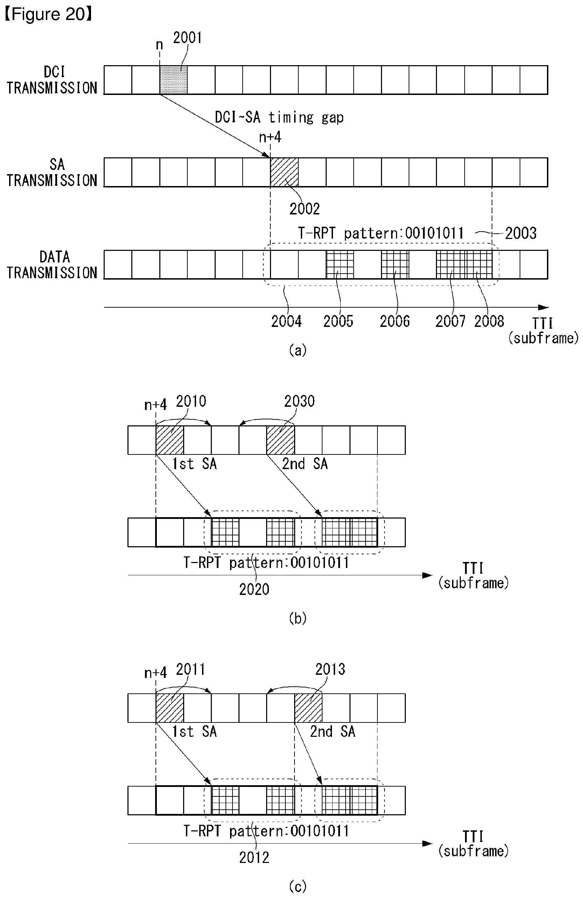

FIG. 20 illustrates a method for determining a transmission timing of data using T-RPT pattern proposed in the present disclosure.

Particularly, FIG. 20a illustrates an example of a method for determining data transmission timing based on SA transmission timing.

That is, method 1 relates to a method of synchronizing a starting position of data transmission according to T-RPT pattern with a starting position of SA transmission, and the corresponding method provides a method for solving the situation that a UE is unable to transmit data when the UE fails to obtain a starting position of data transmission in the out-of coverage scenario.

For example, a case may occur that a UE operating mode 2 fails to obtain the information related to data transmission starting point through SIB, RRC signaling or DCI from an eNB.

In this case, a problem may occur that the UE is unable to (re)transmit data.

Accordingly, method 1 defines such that data transmission timing is synchronized with transmission timing of SA.

When applying method 1, it is assumed that the SA includes T-RPT pattern, and it is assumed that a UE operating in Mode 1 (or Mode 3) generates SA through DCI and a UE operating in Mode 2 (or Mode 4) obtains SA in advance or generates SA independently (if it is required).

Particularly, the situation in which method 1 is applied may be as below.

In the case that a first UE receiving information related to data transmission starting point through SIB or RRC signaling, and the like transmits SA to a second UE that fails to receive information related to the data transmission starting point, the second UE interprets that the T-RPT pattern included in the SA is applied from the SA transmission timing.

That is, the first UE starts a transmission of data on a subframe which is the same as the subframe for transmitting the SA to the second UE.

In addition, the second UE may assume that data is (re)transmitted according to the T-RPT pattern from the SA transmission timing.

Here, the first UE is a UE that is able to receive information related to the data transmission starting timing from an eNB, and may be a UE that operates in Mode 1 (or Mode 3), and the second UE is a UE that is unable to receive information related to the data transmission starting timing from an eNB, and may be a UE that operates in Mode 2 (or Mode 4).

And, it is assumed that the second UE may receive SIB or RRC signaling, but when applying method 1, the second UE is unable to receive SIB or RRC signaling including the information related to data transmission starting timing.

In addition, a single SA may schedule a single Transport Block (TB).

The contents related to method 1 described above may be identically applied to method 2 (determining data transmission timing considering a relationship with DCI transmission timing) that will be described below.

For example, according to method 1, the DCI is transmitted in subframe (SF) #n, the SA is transmitted SF #(n+k) (e.g., k = 4), and the T-RPT pattern indicated by the SA is applied from SF #(n+k) timing.

The T-RPT pattern indicated by the SA may be included in the DCI which is transmitted on SF #n.

Referring to FIG. 20a, an eNB may transmit the DCI to a transmission UE on subframe (SF) #n 2001, and the transmission UE may transmit the SA to a reception UE on SF #(n+k) (e.g., k = 4) 2002.

At this time, the transmission UE may transmit data related to the SA to the reception UE by applying the T-RPT pattern indicated by the SA from the timing when the SA is transmitted, that is, SF #(n+k) timing.

It may be interpreted that the T-RPT pattern represents a specific form or a regular form of the time resource for a data transmission.

That is, the T-RPT pattern is a concept representing a form for a plurality of data resources, and a plurality of data resources may include repeated data resource or retransmitted data resource.

For example, as shown in FIG. 20a, in the case that the T-RPT pattern is '00101011' (2003), an applying timing of data transmission is SF #n+4 (2004) on which the SA is transmitted.

That is, the subframe on which data transmission is started is the same as the subframe on which the SA is transmitted.

In addition, the timing when an actual data transmission occurs may be SF #(n+k+2)(2005), SF #(n+k+4)(2006), SF #(n+k+6)(2007) and SF #(n+k+7)(2008) as shown in FIG. 20a.

In FIG. 20a, k is 4, and total (re)transmission count of data is 4 times.

Next, a case of (re)transmitting data using a plurality of SAs is described with reference to FIG. 20b and FIG. 20c.

FIG. 20a shows the case that a transmission or a retransmission of all data is performed after a single SA transmission.

Different from FIG. 20a, a plurality of SAs may be used for a transmission or a retransmission of all data.

That is, referring to FIG. 20b and FIG. 20c, it is shown that a part of data (re)transmission is performed after the first SA transmission, and (re)transmission for the remaining data is performed through the next SA (or the second SA) transmission.

In FIG. 20a and FIG. 20c, it is assumed that data is (re)transmitted twice times per a single SA.

As shown in FIG. 20b, the second SA transmission timing transmitted after the first SA transmission may be obtained from a timing gap between the first SA transmission timing and the first data transmission timing.

The timing gap may be represented as an offset, and the timing gap may be defined in a subframe unit.

However, when the method shown in FIG. 20b is applied, before all of the first SA transmission 2010 and the data 2020 related to the first SA transmission are transmitted, the second SA 2030 may be transmitted, and accordingly, the case may occur that the data associated with the first SA transmission and the second SA are (unintentionally) FDMed, or the data associated with the first SA transmission is transmitted on the same timing or the ahead timing of the second SA transmission timing.

Accordingly, in order to solve such a situation, a method of transmitting the second SA may be considered on the timing immediately next to the timing (or subframe) when the last data (re)transmission is completed associated with the first SA or on the timing departing as much as a predetermined offset.

For example, FIG. 20c shows the case that two data 2012 (re)transmission associated with the first SA 2011 are completed, and the second SA 2013 is transmitted on the timing departing as much as 0 TTI offset.

The size of the predetermined offset may be indicated through RRC signaling, and the like, or predefined, or indicated through a physical channel (e.g., DCI).

Method 2: Application of T-RPT pattern after a predetermined timing gap from DCI transmission timing

Different from method 1, method 2 relates to a method for applying T-RPT pattern after a predetermined timing gap from the DCI transmission timing, not the SA transmission timing.

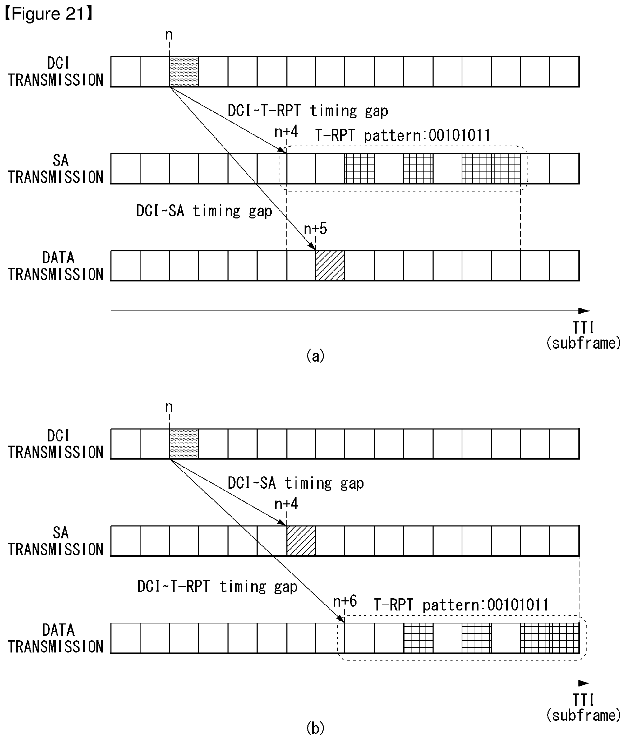

FIG. 21 illustrates another method for determining a transmission timing of data using T-RPT pattern proposed in the present disclosure.

As shown in FIG. 21a, an eNB transmits DCI to a transmission UE on subframe (SF) #n, and the transmission UE transmits data to a reception UE by applying the T-PRT pattern on SF #(n+m) (e.g., m = 4).

Here, the m value may be indicated through RRC signaling, and the like, or predefined, or forwarded or transmitted to the UE through a DCI field (e.g. T-RPT offset field).

FIG. 21a shows the case that T-RPT pattern is '00101011' and m = 4.

In FIG. 21a, the timing gap k (k=5, 6, ...) between DCI and SA transmission timings may be indicated to a UE through RRC signaling, or predefined, or forwarded through a DCI field (e.g. T-RPT offset field).

Here, in the case that the m value corresponding to the T-RPT timing gap is identical to the k value defined in the method 1 described above, method 1 and method 2 operate in the same manner, that is, data is (re)transmitted on the same timing.

FIG. 21b illustrates another method for determining a transmission timing of data using T-RPT pattern proposed in the present disclosure.

Particularly, FIG. 21b shows the case that data is transmitted by applying the T-RPT pattern on the timing departing from k subframe from DCI transmission timing.

Here, k corresponds to 6.

In the case that the timing of transmitting data by applying the T-RPT pattern is defined as the timing departing as much as k' subframe from the SA transmission timing, k' corresponds to 2.

However, in some cases, a case may occur that (the first) SA is transmitted on timing later than (the first or the later) data transmission timing.

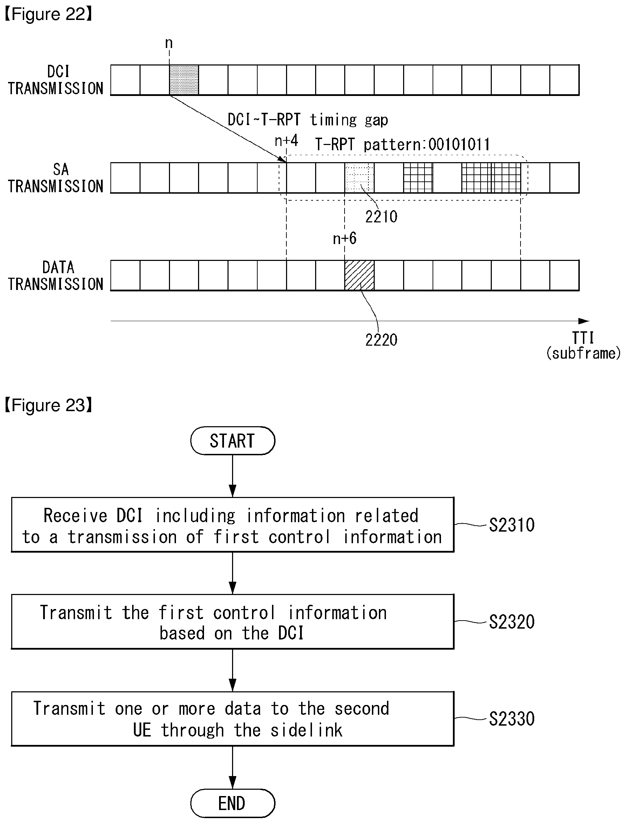

Accordingly, in order to prevent it, as shown in FIG. 22, the first bit 2210 having '1' value for the first time in the T-RPT pattern is synchronized with the SA transmission timing (SF #n+6, 2220). In this case, the SA and (the first) data may be transmitted with being FDMed.

That is, FIG. 22 illustrates another method for determining a transmission timing of data using T-RPT pattern proposed in the present disclosure.

In addition, it is defined that the remaining bits of the T-RPT pattern corresponds to (re)transmission timing of data.

Here, the remaining bits of the T-RPT pattern represent the bits after the first bit having '1' value for the first time in the T-PRT pattern.

That is, in the case that total x bits having '1' value are existed in the T-RPT pattern, 1 bit among the total x bits indicates SA transmission, and the remaining (x-1) bit(s) indicates (re)transmission of data. In this case, it means that data is (re)transmitted (x-1) times.

**(Second embodiment: not using T-RPT field)**

The second embodiment relates to a method of using another field, not using the T-RPT field included in the DCI of Sidelink communication for the DCI of V2X Sidelink communication.

The second embodiment may be more efficient than the first embodiment in the following reasons.

First, since it is required to reduce a size of the DCI in V2X Sidelink communication (Mode 3 and Mode 4), it is preferable to define a new field having a bit number smaller than that of the T-RPT field using 7 bits in the existing Sidelink communication.

The reason is because there is not so such data transmission amount for V2X Sidelink communication and a problem that resource is wasted may occur in the case that resource is allocated using the existing T-RPT.

In addition, since mobility is added when a UE drives in fast speed in the V2X Sidelink communication, in the case that resource is allocated in the existing T-RPT pattern method, the V2X Sidelink communication may not be properly performed.

In the case that several elements constructing T-RPT, for example, a number of repetition transmissions or repeatedly transmitted pattern is limited to a predetermined number, all T-RPT patterns may not be required. That is, this may mean that resource flexibility is not so great.

Accordingly, in this case, a method of newly defining and using other fields (e.g., other indicators) performing the same operation may be considered than using the T-RPT.

As described above, when the indicators other than the T-RPT field are used, the transmission pattern of the data can be represented with a smaller number of bits than using the T-RPT field (7 bits).

For example, in the case that retransmission data is transmitted in a consecutive TTI or with a fixed/uniform (same interval) interval, the T-RPT pattern described above is not required to be used.

As such, the fixed/uniform (same interval) interval of timing offset may be predefined, indicated through RRC signaling in the case of being variable, or indicated through a part of fields of the DCI.

The T-RPT pattern defined in LTE Rel-12 is defined to perform all data retransmissions within 8 TTIs, basically.

However, even in the case that it is not available to perform all data retransmissions within 8 TTIs, it may not be proper to use the T-RPT pattern described above.

As an example of this, in order for all UEs to have (re)transmission patterns which are orthogonal with each other in time domain, it needs to be more widely spread on time domain.

However, in the case that a range that UEs may (re)transmit in time domain is limited, a probability that collision between transmission data occurs (i.e., transmitted in the same TTI) becomes high.

Accordingly, it may not be proper to use the T-RPT pattern in such a case.

Therefore, hereinafter, a method for (re)transmitting data using a time offset related indicator, not the T-RPT pattern, is described in detail.

That is, in the case that it is not available to use the existing T-RPT, new time offset related indicators may be defined which may perform the same or similar operation (or function) as the T-RPT.

The time offset related indicator is information indicating a timing gap or an offset between an initial data transmission and retransmission data.

In addition, the time offset related indicator may also be interpreted as information indicating a timing gap between data.

At this time, types of the information that may be indicated through the existing T-RPT may include (1) number of repetition transmissions, (2) a timing gap between a data transmission and (the next) data transmission (e.g., retransmission), and the like.

In the case of not using the T-RPT, a particular method for indicating information of (1) and (2) is required, which is described below.

In section (2), the data transmission may mean an initial transmission, and (the next) data transmission may mean a retransmission

In addition, unless the case that DCI is transmitted in every (data) (re)transmission, in addition to information of (1) and (2), the following information is also required to be determined.

Further, in the case that the following information does not use the T-RPT similarly, a method of indicating it to a UE may be required.

- Timing gap between SA transmission and (associated) data transmission
- Timing gap between SA transmission and (the next) SA transmission

Furthermore, in addition to the method of indicating a time-frequency index on which SA is to be transmitted through the existing SA resource (or resource for PSCCH), a time resource and a frequency resource of SA may be divided and indicated.

In this case, a method of determining information such as SA (initial) transmitting timing may also be required.

Then, a method for configuring or indicating time resource information representing a time resource for data (re)transmission or a specific form of the time resource, not using the T-RPT pattern, will be described.

Here, the time resource information may include indicators related to a timing offset.

That is, in the case that the T-RPT described in the first embodiment is not used for data (re)transmission in the V2X Sidelink communication, information needs to be configured or indicated, such as (1) number of repetition transmissions, (2) SA (initial) transmission timing, (3) a timing gap between SA transmission and (associated) data transmission, (4) a timing gap between data transmission and (the next) data transmission, and the like. At least one of (1) to (4) may be included in the time resource information.

In the case that the T-RPT is not used, a method for indicating or configuring each of the information of (1) to (4) will be described in detail.

First, the number of repetition transmissions is described.

The number of repetition transmissions may represent a count of data being repeated or retransmitted.

In the case that the T-RPT is used, the information for data number of repetition transmissions is implicitly mapped in the T-RPT.

However, in the case that the T-RPT is not used, the number of repetition transmissions of data may be indicated or configured by using the message set of Table 3 described above.

In the case that the message set is not included in the DCI or not signaled to a UE, the number of repetition transmissions may be indicated through RRC signaling or a part of bits of the DCI may be used for the use of informing the number of repetition transmissions.

Here, the information or the field indicating the number of repetition transmissions may be represented as N_rpt field, for example.

Next, SA (initial) transmission timing is described.

The SA (initial) transmission timing may be preferred to use a method of indicating or determining how much degree of offset is departed with reference to a specific timing (as a reference) rather than indicating a specific absolute value of a timing when SA is transmitted.

For example, in the case that an eNB transmits the DCI to a transmission UE on $n^{th}$ subframe (SF #n), it may be defined that the associated SA is transmitted on $n+4^{th}$ subframe (SF #n+4) or the first Sidelink subframe generated after the SF #n+4.

The Sidelink subframe means a subframe on which the SA or data can be transmitted, and may be represented as Sidelink Control (SC) period.

The expression 'A and/or B' used in the present disclosure may be identically interpreted as the meaning of 'at least one of A or B'.

As such, in the case that SA transmission timing is defined, an eNB may indicate only the frequency resource allocation information for the SA transmission to a UE.

Subsequently, the timing gap between SA transmission and (associated) data transmission is described.

When a specific message is generated (from a specific UE), until the timing when a reception UE receives the generated specific message, a latency time occurs (in physical layer) including 1) timing gap between the message generation time and the DCI transmission time, 2) timing gap between the DCI transmission time and the SA transmission time, and 3) timing gap between the SA transmission time and the Data transmission time.

It needs to configure a timing gap between the data transmissions such that the summation of the timing gaps of sections 1) to 3) becomes not to great considering latency requirements for the message transmission.

For example, assuming that each of the timing gap between the DCI transmission time and the SA transmission time and the timing gap between the SA transmission time and the Data transmission time is 4 TTIs, there exists latency time of 8 TTIs already owing to the two timing gaps.

Accordingly, it is required to define or configure such that the timing gaps between the SA transmission time and the Data transmission time does not have too great value.

In other words, this may mean that a range of fluctuation of the timing gap is not too great.

Accordingly, the following two methods (method 1 and method 2) may be considered such that the timing gaps between the SA transmission time and the Data transmission time does not have too great value.

(Method 1)

First, method 1 uses the timing gap from the SA transmission time to the Data transmission time as a value which is common to all UEs and a predefined fixed value.

The fact that the range of fluctuation of the corresponding timing gap (from the SA transmission time to the Data transmission time) is not too great may be interpreted that it does not have a significant meaning to configure the corresponding timing gap value in UE-specific manner.

Accordingly, it may be defined such that all UEs use a predefined fixed value.

(Method 2)

Method 2 uses the timing gap from the SA transmission time to the Data transmission time in UE-specific manner.

As described above, method 2 may be used for the case that it is required to distinguish UEs using UE-specific values or the case that it is required to allocate data resource to be flexible to the maximum.

Method 2 may be divided into method ① and method ② as below.

First, method ① is to indicate the timing gap from the SA transmission time to the Data transmission time through RRC signaling or inform using a part of bits of the DCI.

In the case that the DCI is transmitted in every (data) (re)transmission, this value may be designated through the corresponding field in each DCI, and in the case that the DCI is transmitted once for all (data) (re)transmissions, the timing gap value may be identically applied to all (re)transmissions through the corresponding field.

On the other hand, method ② uses the timing gap from the SA transmission time to the Data transmission time designated in the SA, not informing directly the timing gap from the SA transmission time to the Data transmission time through the DCI.

Whether to use the timing gap from the SA transmission time to the Data transmission time designated in the SA, it may be indicated or configured through 1 bit flag and the like in the DCI.

For example, in the case that the 1 bit flag in the DCI is configured as '1', a transmission UE transmits data to a reception UE with an offset as much as the timing gap designated in the SA.

Here, the SA may designate a timing gap value for one or more data transmissions.

More particularly, the timing gap value for the one or more data transmissions may be determined by using the T-RPT value of the SA.

That is, assuming that a position of each bit of the T-RPT indicates a relative timing gap from the SA transmission time, the fact that a specific bit(s) of the T-RPT is configured as '1' may mean the data is transmitted on the timing departed as much as the corresponding TTI from the SA.

In other words, the timing when '1' value is generated for the first time (or firstly) in the T-RPT pattern may be the timing gap between the SA and (the first or associated) data transmission times.

For example, the timing when '1' value is generated for the first time (or firstly) in the T-RPT pattern is on the first bit (i.e., MSB bit), this may mean that the SA and the data are transmitted on the same timing (or same subframe). In this case, the SA and the data may be transmitted with being FDMed.

Alternatively, in the case that the 1 bit flag in the DCI is '0', it may be interpreted that the timing gap value designated in the SA is not used.

For example, a data transmission time may be determined by using a timing gap field indicating the timing gap from the SA transmission time to the Data transmission time designated in the DCI.

For another example, it may be configured that the SA and the data may be transmitted on the same time, that is, FDMed.

That is, this may mean that the SA and the data are transmitted on the same subframe.

In this case, the 1 bit flag in the DCI may be used as an indicator for distinguishing FDM and TDM between the SA and the data.

Next, a timing gap between a data transmission and (the next) data transmission is described.

Similar to the timing gap between the SA transmission and the (associated) data transmission, it is required to configure such that the value becomes not too great (or a range of fluctuation of the corresponding timing gap is not too great) considering the latency requirement and the like of a message transmission.

Accordingly, the same or similar method may be applied with the scheme of designating the timing gap from the SA transmission time to the data transmission time described above.

That is, firstly, a method may be applied by using the corresponding value (timing gap between data transmission and (the next) data transmission to a value which is common between UEs and predefined fixed value.

Here, the fact that the range of fluctuation of the corresponding value is not too great means that it does not have significant meaning to configure it in UE-specific manner, and it may be considered to use a predefined value commonly for all UEs.

Secondly, a UE-specific value is used.

That is, in the case that UEs needs to be distinguished by UE-specific value, or in the case that data resource allocation has to be performed in flexible manner to the maximum, the UE-specific value may be used.

Even in this case, method ① and method ② of method 2 described above may be identically applied.

That is, like the method ①, the timing gap between data and (the next) data transmission times may be indicated through RRC signaling or indicated by using a part of bits of the DCI. In this case, this value may be indicated again through the SA.

In the case that the DCI is transmitted in every (data) (re)transmission, this value may be designated through the corresponding field for each DCI, and in the case that the DCI is transmitted only once for all (data) (re)transmissions, the timing gap value may be identically applied to all (re)transmissions through the corresponding field.

In addition, like the method ②, the timing gap value between data and (the next) data transmission times is not directly informed through the DCI, but the timing gap indicating the timing gap from the data transmission time and (the next) data transmission time designated in the SA may be applied.

Further, whether the timing gap between the data transmission time and the next data transmission time designated in the SA may be indicated or configured through the 1 bit field in the DCI.

For example, in the case that the 1 bit flag in the DCI is value '1', a transmission UE transmits (the next) data to a reception UE with an offset as much as the timing gap designated in the SA.

The SA may designate a timing gap value for one or more data transmissions.

More particularly, the timing gap value between data transmissions may be determined by using the T-RPT value of the SA.

Alternatively, in the case that the 1 bit flag in the DCI is '0', it may be interpreted that the timing gap value designated in the SA is not used.

For example, a data transmission time may be determined by using a timing gap field between data and (the next) data designated in the DCI.

A part or the whole of the predefined values described above, RRC signaling and DCI fields may be selectively combined and used.

As another embodiment, in the case that resource allocations between dynamic scheduling and SPS scheduling is overlapped, a method for solving it is described.

A part or the whole of the timing when data (re)transmission of dynamic scheduling is generated and the timing when data (re)transmission is generated by SPS (or timing when the corresponding resource is allocated) in a specific UE aspect may be overlapped.

In this case, in the case that different UEs transmit data simultaneously (in the same TTI or the same subframe), problems such as half-duplex, resource collision and interference increase may occur.

Accordingly, a method may be required such that two types of transmissions are not generated simultaneously.

In the case that two transmissions are generated simultaneously, it may be defined to select one of the three methods as below according to message type, application or use case.

First, the first method is to follow resource allocation of dynamic scheduling.

That is, the first method is to follow the resource allocation of dynamic scheduling in the case that SPS transmission period is not long (e.g., 10 ms) and/or more urgent and important message is transmitted through dynamic scheduling.

At this time, the transmission data for dropped SPS (or of which transmission time is missed) may be dropped as it is according to importance or urgency, or may be allocated again in other timing through SPS reconfiguration, scheduling request (for SPS resource allocation).

Next, the second method is to follow the resource allocation of SPS scheduling.

That is, the second method is to follow the SPS scheduling method in the case that the SPS transmission period is relatively long (e.g., 500 ms) and more urgent and importance message is transmitted through serious transmission latency and/or SPS scheduling once the SPS transmission is dropped.

Next, the third method is to follow a priority of the message (or packet).

That is, the third method is to determine the way of resource allocation according to a priority order provided for each message (or packet) in the case that the priority may not be determined only with dynamic scheduling or SPS scheduling scheme simply.

In the case that the priority is the same, scheduling scheme may be determined in random way.

FIG. 23 is a flowchart illustrating an example of a method for transmitting and receiving data in V2X Sidelink communication proposed in the present disclosure.

Referring to FIG. 23, a method is described for a first UE to transmit Sidelink related data to a second UE through sidelink in a wireless communication system supporting Vehicle-to-Everything (V2X) communication.

First, the first UE receives, from a base station, Downlink Control Information (DCI) including information related to a transmission of first control information (step, S2310).

The DCI may also include information for transmission data in addition to the information for the first control information.

In addition, the DCI may include a part of the contents of the first control information.

Further, the DCI may be represented as DCI format 5A in Vehicle-to-Everything (V2X) Sidelink communication.

The first control information is information used for scheduling data transmitted (or to be transmitted) to the second UE, and may be information indicating resource allocation information for data to be transmitted for selecting Sidelink resource or scheduling.

The first control information may be represented Scheduling Assignment (SA), Physical Sidelink Control Channel (PSCCH) and the like.

Here, the first UE may mean a transmission UE, and the second UE may mean a reception UE.

In addition, the DCI is transmitted in subframe #n, and the first control information may be transmitted in subframe #n+k or in a specific sidelink subframe generated after the subframe #n+k.

The k may be 4.

Here, the specific side link subframe may be the first side link subframe (s) occurring after the (n + k) th subframe..

Here, the specific Sidelink subframe may be Sidelink subframe(s) included in Sidelink period firstly usable which is started after subframe #n+k.

The Sidelink period may be represented as SC period.

In addition, the DCI may include second control information indicating a timing gap between the first data transmission and the second data transmission, and may include the information mentioned in the second embodiment described above.

The second control information may indicate a timing gap field,

and included in the first control information.

Later, the first UE transmits, to the second UE, the first control information based on the received DCI (step, S2320).

Later, the first UE transmits, to the second UE, one or more data through the sidelink (step, S2330).

The first control information and the one or more data may be transmitted on an identical timing, and the identical timing may mean an identical subframe.

Further, the first data transmission may mean an initial transmission of data, and the second data transmission may mean a retransmission of data.

**Overview of devices to which the present invention can be applied**

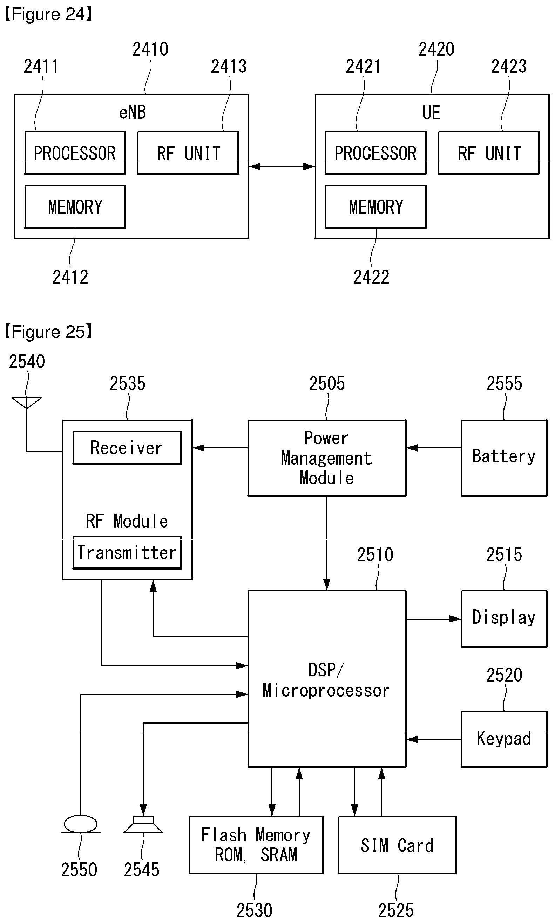

FIG. 24 illustrates a block diagram of a wireless communication device to which the methods proposed in the present disclosure may be applied.

Referring to FIG. 24, a wireless communication system includes a base station (or eNB) 2410 and a plurality of terminals (or UEs) 2420 located within coverage of the eNB 2410.

The eNB 2410 includes a processor 2411, a memory 2412, and a radio frequency (RF) unit 2413. The processor 2411 implements functions, processes and/or methods proposed in FIG. 1 to FIG. 23. Layers of radio interface protocols may be implemented by the processor 2411. The memory 2412 may be connected to the processor 2411 to store various types of information for driving the processor 2411. The RF unit 2413 may be connected to the processor 2411 to transmit and/or receive a wireless signal.

The UE 2420 includes a processor 2421, a memory 2422, and a radio frequency (RF) unit 2423.

The processor 2421 implements functions, processes and/or methods proposed in FIG. 1 to FIG. 23. Layers of radio interface protocols may be implemented by the processor 2421. The memory 2422 may be connected to the processor 2421 to store various types of information for driving the processor 2421. The RF unit 2423 may be connected to the processor 2421 to transmit and/or receive a wireless signal.

The memory 2412 or 2422 may be present within or outside of the processor 2411 or 2421 and may be connected to the processor 2411 or 2421 through various well known units.

For example, in order to transmit and receive data between UEs in a wireless communication system supporting V2X communication, the UE may include a Radio Frequency (RF) unit for transmitting and receiving a radio signal; and a processor functionally connected to the RF unit.

Also, the eNB 2410 and/or the UE 2420 may have a single antenna or multiple antennas.

FIG. 25 illustrates a block diagram of a wireless communication apparatus according to an embodiment of the present invention.

Particularly, in Fig. 25, the UE described above Fig. 24 will be exemplified in more detail.

Referring to Fig. 25, the UE includes a processor (or digital signal processor) 2510, RF module (RF unit) 2535, power management module 2505, antenna 2540, battery 2555, display 2515, keypad 2520, memory 2530, Subscriber Identification Module (SIM) card 2525 (which may be optional), speaker 2545 and microphone 2550. The UE may include a single antenna or multiple antennas.

The processor 2510 may be configured to implement the functions, procedures and/or methods proposed by the present invention as described in FIG. 1 to FIG. 23. Layers of a wireless interface protocol may be implemented by the processor 2510.

The memory 2530 is connected to the processor 2510 and stores information related to operations of the processor 2510. The memory 2530 may be located inside or outside the processor 2510 and may be connected to the processors 2510 through various well-known means.

A user enters instructional information, such as a telephone number, for example, by pushing the buttons of a keypad 2520 or by voice activation using the microphone 2550. The microprocessor 2510 receives and processes the instructional information to perform the appropriate function, such as to dial the telephone number. Operational data may be retrieved from the SIM card 2525 or the memory module 2530 to perform the function. Furthermore, the processor 2510 may display the instructional and operational information on the display 2515 for the user's reference and convenience.

The RF module 2535 is connected to the processor 2510, transmits and/or receives an RF signal. The processor 2510 issues instructional information to the RF module 2535, to initiate communication, for example, transmits radio signals comprising voice communication data. The RF module 2535 comprises a receiver and a transmitter to receive and transmit radio signals. An antenna 2540 facilitates the transmission and reception of radio signals. Upon receiving radio signals, the RF module 2535 may forward and convert the signals to baseband frequency for processing by the processor 2510. The processed signals would be transformed into audible or readable information outputted via the speaker 2545.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

The embodiments of the present invention may be achieved by various means, for example, hardware, firmware, software, or a combination thereof. In a hardware configuration, the methods according to the embodiments of the present invention may be achieved by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, microcontrollers, microprocessors, etc.

In a firmware or software configuration, the embodiments of the present invention may be implemented in the form of a module, a procedure, a function, etc. Software code may be stored in the memory and executed by the processor. The memory may be located at the interior or exterior of the processor and may transmit data to and receive data from the processor via various known means.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

[Industrial Applicability]

The method for transmitting and receiving data in a wireless communication system supporting V2X communication of the present invention, applied to 3GPP LTE/LTE-A system, is primarily described as an example, but may be applied to various wireless communication systems in addition to the 3GPP LTE/LTE-A system.

**Claims**

1. A method for transmitting data through sidelink in a wireless communication system supporting Vehicle-to-Everything (V2X) communication, the method performed by a first User Equipment comprising:

   receiving, from a base station, Downlink Control Information (DCI) including information related to a transmission of first control information, wherein the first control information is used for scheduling data transmitted to a second User Equipment;
   transmitting, to the second User Equipment, the first control information based on the received DCI; and
   transmitting, to the second User Equipment, one or more data through the sidelink,
   wherein the DCI is transmitted in subframe #n,
   wherein the first control information is transmitted in subframe #n+k or in a specific sidelink subframe generated after the subframe #n+k, and
   wherein the DCI includes second control information indicating a timing gap between a first data transmission and a second data transmission.

2. The method of claim 1, wherein the k is 4.

3. The method of claim 1, wherein the first control information and the one or more data are transmitted to the second User Equipment on an identical timing.

**4.** The method of claim 3, wherein the identical timing is an identical subframe.

**5.** The method of claim 1, wherein the first data transmission is an initial transmission of data, and wherein the second data transmission is a retransmission of data.

**6.** The method of claim 1, wherein the first control information is a Scheduling Assignment (SA).

**7.** The method of claim 1, wherein the second control information is a timing gap field.

**8.** The method of claim 1, wherein the first control information includes the second control information.

**9.** The method of claim 1, wherein the specific sidelink subframe includes initial sidelink subframes generated after the subframe #n+k.

**10.** The method of claim 1, when resource allocations for the one or more data are scheduled simultaneously by Dynamic Scheduling and Semi-Persistent Scheduling (SPS), wherein either one of the Dynamic Scheduling and the SPS is applied based on a specific criterion.

**11.** The method of claim 10, wherein the specific criterion includes at least one of a length of transmission period of the SPS or an importance of transmission data.

**12.** A first User Equipment for transmitting data through sidelink in a wireless communication system supporting Vehicle-to-Everything (V2X) communication, the first User Equipment comprising:

a Radio Frequency (RF) unit configured to transmit and receive a radio signal; and
a processor functionally connected with the RF unit,
wherein the processor is configured to perform:

receiving, from a base station, Downlink Control Information (DCI) including information related to a transmission of first control information, wherein the first control information is used for scheduling data transmitted to a second User Equipment;
transmitting, to the second User Equipment, the first control information based on the received DCI; and
transmitting, to the second User Equipment, one or more data through the sidelink,

wherein the DCI is transmitted in subframe #n,
wherein the first control information is transmitted in subframe #n+k or in a specific sidelink subframe generated after the subframe #n+k, and
wherein the DCI includes second control information indicating a timing gap between a first data transmission and a second data transmission.

**13.** The first User Equipment of claim 12, wherein the k is 4.

**14.** The first User Equipment of claim 12, wherein the first control information and the one or more data are transmitted to the second User Equipment on an identical timing.

**15.** The first User Equipment of claim 14, wherein the identical timing is an identical subframe.

**16.** The first User Equipment of claim 12, wherein the first data transmission is an initial transmission of data, and wherein the second data transmission is a retransmission of data.

**17.** The first User Equipment of claim 12, wherein the second control information is a timing gap field.

**18.** The first User Equipment of claim 12, wherein the first control information includes the second control information.

**19.** The first User Equipment of claim 12, wherein the specific sidelink subframe includes initial sidelink subframes generated after the subframe #n+k.

【Figure 1】

(a)

(b)

【Figure 2】

One downlink slot

70FDM symbols

$N^{DL}$ x 12Subcarrier

12Subcarrier

Resource block
12X7 resource
element

Resource element

【Figure 3】

Control region · · · · · · · · · · Data region

First slot · · · · · · Second slot

One subframe

Frequency

Time

【Figure 4】

Control region

Data region

RB pair

One slot    One slot

Subframe

Frequency

Time

【Figure 5】

(a)                                    (b)

EP 3 481 125 A1

【Figure 6】

(a)

(b)

(c)

(d)

【Figure 7】

UE A

(a)

| PDCP | ⟷ | PDCP |
| RLC | ⟷ | RLC |
| MAC | ⟷ | MAC |
| PHY | ⟶ | PHY |

UE B

PU5-U

【Figure 7】 (b)

UE A

(b)

| RRC | ⟷ | RRC |
| RLC | ⟷ | RLC |
| MAC | ⟷ | MAC |
| PHY | ⟷ | PHY |

UE B

PU5-C

【Figure 8】

UE A                                    UE B

| PC5 Signalling Protocol | ⟷ | PC5 Signalling Protocol |
| PDCP | ⟷ | PDCP |
| RLC | ⟷ | RLC |
| MAC | ⟷ | MAC |
| PHY | ⟷ | PHY |

PC5 Signalling Protocol stack

【Figure 9】

【Figure 10】

【Figure 11】

【Figure 12】

【Figure 13】

【Figure 14】

(a) V2V operation

(b) V2I operation

(c) V2P operation

【Figure 15】

(a) V2V operation

(b) V2I operation

(c) V2P operation

(d) V2N operation

【Figure 16】

(a) Scenario 3A

(b) Scenario 3B

【Figure 17】

(a)                    (b)

【Figure 18】

【Figure 19】

```
                    ┌─────────────┐
                    │    START    │
                    └──────┬──────┘
                           │
                           ▼
    ┌──────────────────────────────────────────┐
    │ Receive DCI including resource allocation │
    │   information related to a transmission of │───S1905
    │ control information with respect to Sidelink│
    └──────────────────────┬─────────────────────┘
                           │
                           ▼
    ┌──────────────────────────────────────────┐
    │    Transmit control information and data  │───S1910
    └──────────────────────┬─────────────────────┘
                           │
                           ▼
                    ┌─────────────┐
                    │     END     │
                    └─────────────┘
```

【Figure 20】

(a)

(b)

(c)

【Figure 21】

(a)

(b)

【Figure 22】

【Figure 23】

【Figure 24】

【Figure 25】

## INTERNATIONAL SEARCH REPORT

| | International application No. |
|---|---|
| | PCT/KR2017/007049 |

**A. CLASSIFICATION OF SUBJECT MATTER**

*H04W 72/12(2009.01)i*

According to International Patent Classification (IPC) or to both national classification and IPC

**B. FIELDS SEARCHED**

Minimum documentation searched (classification system followed by classification symbols)
H04W 72/12; H04B 7/26; H04L 1/18; H04W 72/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: V2X, sidelink, control information, DCI, scheduling, subframe, gap

**C. DOCUMENTS CONSIDERED TO BE RELEVANT**

| Category* | Citation of document, with indication, where appropriate, of the relevant passages | Relevant to claim No. |
|---|---|---|
| Y | WO 2015-122629 A1 (LG ELECTRONICS INC.) 20 August 2015<br>See paragraphs [0496]-[0566]; claims 1-8; and figures 22-29. | 1-6,8-16,18,19 |
| A | | 7,17 |
| Y | US 2016-0065332 A1 (LG ELECTRONICS INC.) 03 March 2016<br>See paragraphs [0129]-[0130]; and figures 5-8. | 1-6,8-16,18,19 |
| Y | EP 2701442 A2 (HUAWEI TECHNOLOGIES CO., LTD.) 26 February 2014<br>See paragraphs [0004], [0035]; and figure 1. | 10,11 |
| A | NEC, "Schedule Assignment for SPS", R1-164473, 3GPP TSG RAN WG1 Meeting #85,<br>13 May 2016<br>See section 2. | 1-19 |
| A | LG ELECTRONICS, "Discussion on Sidelink Subframe Timing and Number<br>Determination, R1-164521, 3GPP TSG RAN WG1 Meeting #85, 14 May 2016<br>See section 2. | 1-19 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 OCTOBER 2017 (24.10.2017) | **24 OCTOBER 2017 (24.10.2017)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/007049**

| Patent document cited in search report | Publication date | Patent family member | Publication date |
|---|---|---|---|
| WO 2015-122629 A1 | 20/08/2015 | US 2016-0345312 A1 | 24/11/2016 |
| US 2016-0065332 A1 | 03/03/2016 | CN 104068071 B | 24/02/2016 |
| EP 2701442 A2 | 26/02/2014 | CN 102884851 A | 16/01/2013 |
| | | CN 102884851 B | 27/01/2016 |
| | | EP 2701442 A4 | 18/02/2015 |
| | | EP 2701442 B1 | 06/07/2016 |
| | | WO 2011-120469 A2 | 06/10/2011 |
| | | WO 2011-120469 A3 | 19/04/2012 |

Form PCT/ISA/210 (patent family annex) (January 2015)